(19) Europäisches Patentamt
European Patent Office
Office européen des brevets

(11) EP 4 557 404 A1

(12) EUROPEAN PATENT APPLICATION

(43) Date of publication:
**21.05.2025 Bulletin 2025/21**

(21) Application number: **24212867.6**

(22) Date of filing: **14.11.2024**

(51) International Patent Classification (IPC):
***H01M 4/58*** *(2010.01)* ***H01M 4/136*** *(2010.01)*
***H01M 10/0525*** *(2010.01)* ***H01M 10/0562*** *(2010.01)*
*H01M 4/02* *(2006.01)*

(52) Cooperative Patent Classification (CPC):
**H01M 4/5815; H01M 4/136; H01M 10/0525; H01M 10/0562;** H01M 2004/028; H01M 2300/0068; H01M 2300/008

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.11.2023 KR 20230159276**

(71) Applicant: **SAMSUNG SDI CO., LTD.**
**Yongin-si, Gyeonggi-do 17084 (KR)**

(72) Inventors:
- **Shim, Kyueun**
  **Gyeonggi-do 17084 (KR)**
- **Son, Inhyuk**
  **Gyeonggi-do 17084 (KR)**
- **Jo, Sungnim**
  **Gyeonggi-do 17084 (KR)**
- **Lee, Jieun**
  **Gyeonggi-do 17084 (KR)**
- **Lim, Hyungsub**
  **Gyeonggi-do 17084 (KR)**
- **Park, Taehyun**
  **Gyeonggi-do 17084 (KR)**

(74) Representative: **Michalski Hüttermann & Partner Patentanwälte mbB**
**Kaistraße 16A**
**40221 Düsseldorf (DE)**

# (54) CATHODE FOR LITHIUM BATTERY AND LITHIUM BATTERY INCLUDING THE SAME

(57) A lithium battery may include a cathode, wherein the cathode includes a cathode current collector, and a cathode active material layer on the cathode current collector, wherein the cathode active material layer includes lithium sulfide ($Li_2S$) and a metal-organic framework.



Processed by Luminess, 75001 PARIS (FR)

## Description

### CROSS-REFERENCE TO RELATED APPLICATION

The present application claims priority to and the benefit of Korean Patent Application No. 10-2023-0159276, filed on November 16, 2023, in the Korean Intellectual Property Office, the entire disclosure of which is incorporated herein by reference.

### BACKGROUND

#### 1. Field

Embodiments of the present disclosure described herein are related to a cathode for a lithium battery and a lithium battery including the same.

#### 2. Description of the Related Art

Recently, in accordance with industrial demand, batteries having relatively high energy density and relatively high safety have been actively developed. For example, lithium batteries are utilized in one or more suitable applications including information devices, communication devices, vehicles, and/or the like. Here, vehicles (e.g., electric vehicles) may impact human wellbeing, and thus the safety thereof may be emphasized.

A short circuit in lithium batteries that include a liquid electrolyte may increase the possibility of fires and/or explosions. Solid secondary batteries utilizing a solid electrolyte instead of a liquid electrolyte have been proposed. Solid electrolytes may have a lower possibility of ignition as compared with liquid electrolytes.

Accordingly, solid secondary batteries that include a solid electrolyte instead of a liquid electrolyte, may reduce the possibility of fires or explosions, and solid batteries may thus improve safety.

### SUMMARY

Aspects according to one or more embodiments are directed toward a novel cathode for a lithium battery in which hydrogen sulfide generation is reduced.

Aspects according to one or more embodiments are directed toward a lithium battery including the cathode for the lithium battery.

Additional aspects will be set forth in part in the description which follows and, in part, will be apparent from the description, or may be learned by practice of the presented embodiments of the present disclosure.

According to one or more embodiments, a cathode for a lithium battery includes a cathode current collector, and a cathode active material layer disposed on the cathode current collector, wherein the cathode active material layer includes lithium sulfide ($Li_2S$), and a metal-organic framework.

According to one or more embodiments, a lithium battery includes the cathode for the lithium battery, an anode, and a solid electrolyte disposed between the cathode and the anode.

### BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a cross-sectional view of a lithium battery according to embodiments;
FIG. 2 is a cross-sectional view of a lithium battery according to embodiments;
FIG. 3 is a cross-sectional view of a lithium battery according to embodiments;
FIG. 4 is a cross-sectional view of a lithium battery according to embodiments; and
FIG. 5 is a cross-sectional view of a lithium battery according to embodiments.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. In some embodiments, the embodiments are merely described herein, by

referring to the drawings, to explain aspects of the present description. As utilized herein, the term "and/or" includes any and all combinations of one or more of the associated listed items.

As utilized herein, expressions such as "at least one of", "one of", and "of (e.g., selected from among)", when preceding a list of elements, modify the entire list of elements and do not modify the individual elements of the list. For example, "at least one of a, b or c", "at least one selected from among a, b and c", and/or the like, may indicate only a, only b, only c, both (e.g., simultaneously) a and b, both (e.g., simultaneously) a and c, both (e.g., simultaneously) b and c, all of a, b, and c, or variations thereof.

Unless otherwise defined, all terms (including technical and scientific terms) utilized in the present disclosure have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

Embodiments are described in the present disclosure with reference to cross-sectional views which are schematic diagrams of idealized embodiments. As such, variations from the shapes of the illustrations as a result, for example, of manufacturing techniques and/or tolerances, are to be expected. In some embodiments, the embodiments described in the present disclosure should not be construed as limited to the particular shapes regions of illustrated in the present disclosure but may include deviations in shapes that result, for example, from manufacturing. For example, regions illustrated or described as being flat may be typically rough and/or have nonlinear features. Moreover, sharp-drawn angles may be round. In some embodiments, regions illustrated in the drawings are schematic in nature and their shapes are not intended to illustrate the actual shape of a region and are not intended to limit the scope of the claims.

The present disclosure may, however, be embodied in different forms and should not be construed as limited to the embodiments described in the present disclosure. These embodiments are provided so that the present disclosure will be thorough and complete, and will fully convey the scope of the present disclosure to those skilled in the art. Like reference numerals designate like elements.

When it is described that an element is "on" another element, it will be understood that the element may be disposed directly on another element or still another element may be interposed therebetween. On the other hand, when it is described that an element is "directly on" another element, still another element is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. In some embodiments, a first element, component, region, layer, or section described may be termed a second element, component, region, layer, or section without departing from the teachings of the present specification.

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. "At least one" should not be construed as being limited to the singular. As utilized herein, the term "and/or" includes any and all combinations of one or more of the associated listed items. The terms "includes," "including," "comprises," and/or "comprising," when utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature’s relationship to another element or feature. It will be understood that the spatially relative terms are intended to encompass different orientations of a device in utilize or operation in addition to the orientation illustrated in the drawings. For example, when a device in the drawings is turned over, elements described as "below" or "beneath" other elements or features would then be "above" or "over" the other elements or features. In some embodiments, the example term "below" may encompass both (e.g., simultaneously) orientations of above and below. The device may be otherwise oriented (rotated 90 degrees or at other orientations), and the spatially relative terms utilized herein may be interpreted accordingly.

"Group" refers to a group of the periodic table of elements according to the International Union of Pure and Applied Chemistry ("IUPAC") Groups 1-18 group classification system.

As utilized herein, the term "particle size" or "particle diameter" refers to an average diameter when particles (e.g., diameter or size of crystallites, cross-section diameter or size of tubes, and/or the like) are spherical (or circular) and refers to an average major axis length when particles are non-spherical (or non-circular). A particle diameter may be measured by utilizing a particle size analyzer (PSA). A "particle size" or "particle diameter" is, for example, an average particle diameter. An "average particle diameter" refers to, for example, a median particle diameter (D50).

D50 refers to a particle size corresponding to a 50 % cumulative volume if (e.g., when) a particle size distribution measured through a laser diffraction method is calculated from particles having a smaller particle size.

D90 refers to a particle size corresponding to a 90 % cumulative volume if (e.g., when) a particle size distribution measured through a laser diffraction method is calculated from particles having a smaller particle size.

D10 refers to a particle size corresponding to an about 10 % cumulative volume if (e.g., when) a particle size distribution measured through a laser diffraction method is calculated from particles having a smaller particle size.

The term "metal" as utilized herein includes all of metals and metalloids such as silicon and germanium in an elemental or ionic state.

The term "alloy" as utilized herein refers to a mixture of two or more metals.

The term "electrode active material" as utilized herein refers to an electrode material that may undergo lithiation and delithiation.

The term "composite cathode active material" as utilized herein refers to a cathode material that may undergo lithiation and delithiation.

The term "anode active material" as utilized herein refers to an anode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within $\pm$ 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

While specific embodiments have been described, alternatives, modifications, variations, improvements, and substantial equivalents that are or may be presently unforeseen may arise to applicants or others skilled in the art. In some embodiments, the appended claims as filed and as they may be amended are intended to embrace all such alternatives, modifications, variations, improvements, and substantial equivalents.

Hereinafter, a cathode active material, a cathode including the cathode active material, a lithium battery including the cathode, and a method of preparing a cathode active material according to embodiments will be described in more detail.

**Cathode**

A cathode for a lithium battery according to embodiments may include a cathode current collector, and a cathode active material layer disposed on the cathode current collector, wherein the cathode active material layer may include lithium sulfide ($Li_2S$) and a metal-organic framework.

**Cathode: Cathode active material layer**

The cathode according to embodiments may include the cathode current collector, and the cathode active material layer disposed on the cathode current collector. The cathode active material layer may include the above-described composite cathode active material.

According to embodiments, the cathode active material layer may further include a solid electrolyte. For example, the cathode may include the composite cathode active material and the solid electrolyte to have further reduced internal resistance. In some embodiments, the cycle characteristics of a secondary battery including the cathode may be further improved.

Referring to FIGS. 1 to 5, a cathode 10 may include a cathode current collector 11, and a cathode active material layer 12 disposed on the cathode current collector 11. The cathode active material layer 12 may include lithium sulfide ($Li_2S$), and a metal-organic framework.

According to embodiments, the cathode active material layer 12 may further include an ion-conductive lithium salt. According to embodiments, the cathode active material layer 12 may include a $Li_2S$-containing composite, and the $Li_2S$-containing composite may include a lithium salt ($Li_2S$) and an ion-conductive lithium salt. For example, the $Li_2S$-containing composite may include a composite of a lithium salt ($Li_2S$) and an ion-conductive lithium salt.

For example, the composite of $Li_2S$ and the lithium salt may have ductility and thus may be distinguished from an oxide-based solid electrolyte of a related art that has brittleness, for example, an oxide-based solid electrolyte with a garnet structure. The composite of $Li_2S$ and the lithium salt may have lithium ion conductivity and thus may be distinguished from a lithium-free metal oxide of a related art such as alumina which does not have lithium ion conductivity. The composite of $Li_2S$ and the lithium salt may be, for example, a product obtained by mechanically milling $Li_2S$ and a lithium salt. The composite of the $Li_2S$ and the lithium salt may be, for example, a product of a mechanochemical reaction between $Li_2S$ and the lithium salt and thus may be distinguished from a simple mixture of $Li_2S$ and a lithium salt. The simple mixture of $Li_2S$ and the lithium salt may fail to maintain a dense interface between $Li_2S$ and the lithium salt to provide high interfacial resistance, resulting in an increase in internal resistance of a solid electrolyte separator.

The composite of $Li_2S$ and the lithium salt may be represented by $Li_2S$-$Li_aX_b$, wherein $1 \leq a \leq 5$ and $1 \leq b \leq 5$. X may be I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, $NO_3$, COs, $BH_4$, $SO_4$, $BO_3$, $PO_4$, NCl, $NCl_2$, $BN_2$, or a combination thereof. In some embodiments, a may be, for example, 1, 2, 3, 4, or 5. In some embodiments, b may be, for example, 1, 2, 3, 4, or 5. The lithium salt may be a compound that does not include, for example, sulfur (S).

According to embodiments, the ion-conductive lithium salt may be a binary compound or a ternary compound. For example, the ion-conductive lithium salt may be a binary compound including lithium and one type or kind of element selected from among Groups 13 to 17 of the periodic table of elements. For example, the ion-conductive lithium salt may be a ternary compound including lithium and two types (kinds) of elements selected from among Groups 13 to 17 of the periodic table of elements. The binary compound may include, for example, LiI, LiBr, LiCl, LiF, LiH, $Li_2O$, $Li_2Se$, $Li_2Te$, $Li_3N$, LisP, $Li_3As$, $Li_3Sb$, $Li_3Al_2$, LiBs, or a combination thereof. The composite of $Li_2S$ and the lithium salt may include the binary compound, and thus the ionic conductivity of the composite of $Li_2S$ and the lithium salt may be further improved. In some embodiments, the cycle characteristics of a lithium battery including such a cathode 10 may be further improved.

The ternary compound may include, for example, $Li_3OCl$, $LiPF_6$, $LiBF_4$, $LiSbF_6$, $LiAsF_6$, $LiClO_4$, $LiAlO_2$, $LiAlCl_4$, LiNOs, $Li_2CO_3$, $LiBH_4$, $Li_2SO_4$, LisBOs, $Li_3PO_4$, $Li_4NCl$, $Li_5NCl_2$, $Li_3BN_2$, or a combination thereof. The composite may include such a ternary compound, and thus the ionic conductivity of the composite may be further improved. The composite cathode active material may include such a composite, and thus the internal resistance of the cathode 10 may further decrease. In some embodiments, the cycle characteristics of a solid secondary battery including such a solid electrolyte separator may be further improved.

According to some embodiments, in the composite of $Li_2S$ and the lithium salt, a molar ratio of $Li_2S$ to the lithium salt may be, for example, in a range of about 50:50 to about 95:5, about 60:40 to about 95:5, about 60:40 to about 90:10, about 65:35 to about 90:10, about 65:35 to about 85:15, or about 70:30 to about 85:15. In the composite of $Li_2S$ and the lithium salt, the molar ratio of $Li_2S$ to the lithium salt may be, for example, in a range of about 50:50 to about 95:5, about 50:50 to about 90:10, about 50:50 to about 85:15, about 50:50 to about 80:20, about 50:50 to about 75:25, or about 50:50 to about 70:30. $L_2S$ and the lithium salt may have a molar ratio in such a range, and thus the cycle characteristics of a lithium battery including the composite cathode active material may be further improved. If (e.g., when) a mole fraction of $Li_2S$ is excessively high (e.g., higher than the above ranges), an effect of improving ionic conductivity by the lithium salt may be insignificant. If (e.g., when) the mole fraction of $Li_2S$ is excessively high (e.g., higher than the above ranges), the energy density of a lithium battery including the composite cathode active material may decrease.

According to some embodiments, the cathode active material layer 12 may further include a carbon-based material. For example, the $Li_2S$-containing composite may further include a carbon-based material. For example, the $Li_2S$-containing composite may be a composite of $Li_2S$, an ion-conductive lithium salt, and a carbon-based material.

For example, as the carbon-based material, for example, any material may be utilized as long as the material may be a material including carbon atoms and may be utilized as a conductive material in the art. The carbon-based material may be, for example, crystalline carbon, amorphous carbon, or a combination thereof. The carbon-based material may be, for example, a sintered material of a carbon precursor. The carbon-based material may include, for example, carbon nanostructures. The carbon nanostructures may include, for example, one-dimensional carbon nanostructures, two-dimensional carbon nanostructures, three-dimensional carbon nanostructures, or a combination thereof. The carbon nanostructures may include, for example, carbon nanotubes (CNTs), carbon nanofibers (CNFs), carbon nanobelts, carbon nanorods, graphene, or a combination thereof.

The carbon-based material may be, for example, a porous carbon-based material or a non-porous carbon-based material. The porous carbon-based material may include, for example, periodic and regular two-dimensional or three-dimensional pores. The porous carbon-based material may include, for example, carbon black (CB) such as Ketjen black (KB), acetylene black (AB), Denka black, thermal black, or channel black; graphite; activated carbon; or a combination thereof. The form of the carbon-based material may be, for example, a particle form, a sheet form, a flake form, and/or the like, but one or more embodiments are not limited thereto. Any material may be utilized as long as the material may be utilized as a carbon-based material in the art.

The carbon-based material may include, for example, a fibrous carbon-based material. A composite of $Li_2S$, a lithium salt, and a carbon-based material may include a fibrous carbon-based material, and thus the electronic conductivity of the composite of $Li_2S$, the lithium salt, and the carbon-based material may be further improved. The composite of $Li_2S$, the lithium salt, and the carbon-based material may include the fibrous carbon-based material, and thus electronic conduction may be more easily performed from the surface to the inside of the composite of $Li_2S$, the lithium salt, and the carbon-based material. The internal resistance of a dry cathode film including the composite of $Li_2S$, the lithium salt, and the carbon-based material may be reduced, and the cycle characteristics of a lithium battery including the dry cathode film may be further improved.

An aspect ratio of the fibrous carbon-based material may be, for example, about 2 or more, about 3 or more, about 4 or more, about 5 or more, about 10 or more, or about 20 or more. The aspect ratio of the fibrous carbon-based material may be, for example, in a range of about 2 to about 30, about 3 to about 30, about 4 to about 30, about 5 to about 30, about 10 to about 30, or about 20 to about 30. The aspect ratio of the fibrous carbon-based material may be, for example, in a range of about 2 to about 30, about 2 to about 20, about 2 to about 10, about 2 to about 8, about 2 to about 5, or about 2 to about 4. The fibrous carbon-based material may have an aspect ratio in such a range so that the overall electronic conductivity of the composite of $Li_2S$, the lithium salt, and the carbon-based material may be improved, and an imbalance of local electronic conductivity in the composite of $Li_2S$, the lithium salt, and the carbon-based material may be further alleviated.

The fibrous carbon-based material may include, for example, carbon nanostructures. The carbon nanostructures may include, for example, CNFs, CNTs, carbon nanobelts, carbon nanorods, or a combination thereof.

The carbon nanostructure may form a primary carbon nanostructure consisting of one carbon nanostructure and a secondary carbon nanostructure in which a plurality of carbon nanostructures aggregate.

A diameter of the primary carbon nanostructure (e.g., average cross-sectional diameter or size) may be, for example, in a range of about 1 nanometer (nm) to about 200 nm, about 1 nm to about 150 nm, about 1 nm to about 100 nm, about 1 nm to about 50 nm, about 1 nm to about 30 nm, or about 1 nm to about 20 nm. A (e.g., an average) length of the primary carbon nanostructure may be, for example, in a range of 10 nm to about 2 μm, about 10 nm to about 1.5 μm, about 10 nm to about 1 μm, about 10 nm to about 500 nm, about 10 nm to about 400 nm, about 10 nm to about 300 nm, about 10 nm to about 200 nm, or about 10 nm to about 100 nm. The diameter and length of the primary carbon nanostructure may be measured from a scanning electron microscope (SEM) or transmission electron microscope (TEM) image. In other embodiments, the diameter and/or length of the primary carbon nanostructure may be measured through laser diffraction.

The secondary carbon nanostructure may be, for example, a structure formed by primary carbon nanostructures being entirely or partially clustered to constitute a bundle-type or kind or rope-type or kind nanostructure (e.g., a secondary carbon nanostructure). The secondary carbon nanostructure may include or be, for example, a bundle-type or kind carbon nanostructure, a rope-type or kind carbon nanostructure, or a combination thereof. A diameter (e.g., average cross-sectional diameter or size) of the secondary carbon nanostructure may be, for example, in a range of about 2 nm to about 200 nm, about 3 nm to about 150 nm, about 5 nm to about 100 nm, about 5 nm to about 50 nm, about 5 nm to about 30 nm, or about 5 nm to about 20 nm. A (e.g., an average) length of the secondary carbon nanotube structure may be, for example, in a range of about 20 nm to about 2 μm, about 30 nm to about 1.5 μm, about 50 nm to about 1 μm, about 50 nm to about 500 nm, about 50 nm to about 400 nm, about 50 nm to about 300 nm, about 50 nm to about 200 nm, or about 50 nm to 100 nm. The diameter and length of the secondary carbon nanostructure may be measured from a SEM image or an optical microscope. In other embodiments, the diameter and/or length of the secondary carbon nanostructure may be measured through laser diffraction. The secondary carbon nanostructure may be dispersed, for example, in a solvent and/or the like to be converted into the primary carbon nanostructure and then may be utilized to prepare the composite of $Li_2S$, the lithium salt, and the carbon-based material.

A content (e.g., amount) of the lithium salt in the composite of $Li_2S$, the lithium salt, and the carbon-based material may be, for example, in a range of about 1 wt% to about 40 wt%, about 5 wt% to about 35 wt%, about 10 wt% to about 35 wt%, about 15 wt% to about 35 wt%, about 20 wt% to about 35 wt%, or about 25 wt% to about 35 wt% of the total weight of the composite of $Li_2S$, the lithium salt, and the carbon-based material. If (e.g., when) the content (e.g., amount) of the lithium salt excessively increases (e.g., higher than the above ranges), the energy density of a lithium battery may

decrease. If (e.g. when) the content (e.g., amount) of the lithium salt is excessively low (e.g., lower than the above ranges), the ionic conductivity of the composite of $Li_2S$, the lithium salt, and the carbon-based material may decrease so that the internal resistance of a dry cathode film may increase. In some embodiments, the cycle characteristics of a lithium battery including a dry cathode film may deteriorate.

In the composite of $Li_2S$, the lithium salt, and the carbon-based material, a molar ratio of $Li_2S$ to the lithium salt may be, for example, in a range of about 50:50 to about 95:5, about 60:40 to about 95:5, about 60:40 to about 90:10, about 65:35 to about 90:10, about 65:35 to about 85:15, or about 70:30 to about 85:15. In the composite of $Li_2S$, the lithium salt, and the carbon-based material, the molar ratio of $Li_2S$ to the lithium salt may be, for example, in a range of about 50:50 to about 95:5, about 50:50 to about 90:10, about 50:50 to about 85:15, about 50:50 to about 80:20, about 50:50 to about 75:25, or about 50:50 to about 70:30. The molar ratio of $Li_2S$ to the lithium salt may be in such a range, and thus the cycle characteristics of a lithium battery including a dry cathode film may be further improved. If (e.g., when) a mole fraction of $Li_2S$ is excessively high (e.g., higher than the above ranges), an effect of improving ionic conductivity by the lithium salt may be insignificant. If (e.g., when) the mole fraction of $Li_2S$ is excessively high (e.g., higher than the above ranges), the energy density of a lithium battery including a composite cathode active material may decrease.

According to embodiments, a content (e.g., amount) of the carbon-based material included in the composite of $Li_2S$, the lithium salt, and the carbon-based material may be, for example, in a range of about 1 wt% to about 20 wt%, about 5 wt% to about 20 wt%, or about 10 wt% to about 20 wt% of the total weight of the composite. If (e.g., when) the content (e.g., amount) of the carbon-based material excessively increases (e.g., higher than the above ranges), the energy density of a cathode film and a lithium battery may decrease. If (e.g., when) the content (e.g., amount) of the carbon-based material excessively decreases (e.g., lower than the above ranges), the electronic conductivity of the composite of $Li_2S$, the lithium salt, and the carbon-based material may decrease, and thus the internal resistance of a cathode film may increase. In some embodiments, the cycle characteristics of a secondary battery may deteriorate.

According to some embodiments, the composite of $Li_2S$ and the lithium salt or the composite of $Li_2S$, the lithium salt, and the carbon-based material may include, for example, a solid solution of $Li_2S$ and a lithium salt. The composite may include the solid solution of $Li_2S$ and the lithium salt, and thus the ionic conductivity of the composite may increase. For example, the solid solution of $Li_2S$ and the lithium salt may include lithium ions disposed in $Li_2S$ crystallites, and thus the ionic conductivity of the solid solution of $Li_2S$ and the lithium salt may be improved as compared with that of $Li_2S$. In some embodiments, the ionic conductivity of the composite may be improved, and the internal resistance of the composite may be reduced. The cathode 10 may include such a composite, and thus the internal resistance of the cathode 10 may further decrease. In some embodiments, the cycle characteristics of a lithium battery including such a cathode 10 may be further improved.

According to embodiments, a size of the $Li_2S$ crystallite obtained from an X-ray diffraction (XRD) spectrum of the composite of $Li_2S$ and the lithium salt or the composite of $Li_2S$, the lithium salt, and the carbon-based material may be, for example, about 30 nm or less, about 25 nm or less, or about 20 nm or less. The size of the $Li_2S$ crystallite obtained from the XRD spectrum of the composite may be, for example, in a range of about 1 nm to about 20 nm, about 1 nm to about 15 nm, or about 3 nm to about 10 nm. The size of the $Li_2S$ crystallite may decrease, and thus a contact area between $Li_2S$ and the lithium salt may further increase. The contact area between $Li_2S$ and the lithium salt may further increase, and thus the ionic conductivity of the composite of $Li_2S$ and the lithium salt may further increase. The cathode 10 may include such a composite, and thus the internal resistance of the cathode 10 may further decrease. In some embodiments, the cycle characteristics of a solid secondary battery including such a cathode 10 may be further improved.

For example, $Li_2S$ may have low ionic conductivity, and thus, in order to solve such a drawback, $Li_2S$ may form a composite together with a lithium salt. The composite of $Li_2S$ and the lithium salt or the composite of $Li_2S$, the lithium salt, and the carbon-based material may provide improved ionic conductivity as compared with $Li_2S$ alone. A content (e.g., amount) of $Li_2S$ in the $Li_2S$-containing composite may be in a range of about 50 wt% to about 95 wt%, about 50 wt% to about 90 wt%, about 50 wt% to about 80 wt%, or about 50 wt% to about 70 wt% of the total weight of the $Li_2S$-containing composite. The composite may have a content (e.g., amount) of $Li_2S$ in such a range, and thus a cathode having improved ionic conductivity and improved durability may be prepared. A content (e.g., amount) of the lithium salt in the composite of $Li_2S$ and the lithium salt may be in a range of about 5 wt% to about 50 wt%, about 10 wt% to about 50 wt%, about 20 wt% to about 50 wt%, or about 30 wt% to about 50 wt% of the total weight of the $Li_2S$-containing composite.

A Mohs hardness of each of the lithium salt and the carbon-based material may be greater than that of $Li_2S$. The Mohs hardness of $Li_2S$ may be, for example, about 0.6 or less. The Mohs hardness of the lithium salt may be about 0.7 or more, about 0.8 or more, about 0.9 or more, about 1.0 or more, about 1.5 or more, or about 2.0 or more. The lithium salt may have a Mohs hardness in such a range, $Li_2S$ may be more easily pulverized during a milling process, and the solid solution of $Li_2S$ and the lithium salt may be more easily formed. A Mohs hardness of LiI may be, for example, about 2.0. The Mohs hardness of the carbon-based material may be about 0.7 or more, about 0.8 or more, about 0.9 or more, about 1.0 or more, about 1.2 or more, or about 1.5 or more. The carbon-based material may have a Mohs hardness in such a range, $Li_2S$ may be more easily pulverized during a milling process, and the composite of $Li_2S$, the lithium salt, and the carbon-based material may be more easily formed. A Mohs hardness of CNFs may be, for example, about 1.5.

An ionic conductivity of the composite of $Li_2S$ and the lithium salt or the composite of $Li_2S$, the lithium salt, and the carbon-based material may be, for example, about $1\times10^{-5}$ S/cm or more, about $2\times10^{-5}$ S/cm or more, about $4\times10^{-5}$ S/cm or more, about $6\times10^{-5}$ S/cm or more, about $8\times10^{-5}$ S/cm, or $1\times10^{-4}$ S/cm or more at a temperature of about 25 °C. Ionic conductivity may be measured by utilizing, for example, electrochemical impedance spectroscopy, a direct current (DC) polarization method, and/or the like. The composite of $Li_2S$ and the lithium salt may have an ionic conductivity in such a range, and thus the internal resistance of the cathode 10 including the composite of $Li_2S$ and the lithium salt may further decrease. The cycle characteristics of a solid secondary battery including the cathode 10 may be improved.

According to some embodiments, a content (e.g., amount) of the $Li_2S$-containing composite may be in a range of about 40 wt% to about 90 wt%, about 40 wt% to about 80 wt%, about 50 wt% to about 80 wt%, or about 50 wt% to about 70 wt% with respect to the total weight of the cathode active material layer 12. If (e.g., when) the content (e.g., amount) of the $Li_2S$-containing composite excessively decreases (e.g., lower than the above ranges), the energy density of a secondary battery may decrease. If (e.g., when) the content (e.g., amount) of the $Li_2S$-containing composite excessively increases (e.g., higher than the above ranges), the deterioration of the cathode 10 may be accelerated due to a change in volume of the cathode 10 during charging/discharging. In some embodiments, the cycle characteristics of a lithium battery 1 may deteriorate.

The cathode active material layer 12 may additionally include a composite cathode active material in addition to the above-described $Li_2S$-containing composite.

The composite cathode active material may include, for example, a $Li_2S$-containing composite. A $Li_2S$ composite may include, for example, a composite of $Li_2S$ and a carbon-based material, a composite of $Li_2S$, a carbon-based material, and a solid electrolyte, a composite of $Li_2S$ and a solid electrolyte, a composite of $Li_2S$ and a lithium salt, a composite of $Li_2S$ and a metal carbide, a composite of $Li_2S$, a carbon-based material, and a metal carbide, a composite of $Li_2S$ and a metal nitride, a composite of $Li_2S$, a carbon-based material, and a metal nitride, or a combination thereof.

The composite of $Li_2S$ and the carbon-based material may include $Li_2S$ and the carbon-based material. The carbon-based material may be defined as for the above-described carbon-based material of the $Li_2S$-containing composite. A method of preparing the composite of $Li_2S$ and the carbon-based material may be a dry method, a wet method, or a combination thereof, but one or more embodiments are not limited thereto. For example, any method may be utilized as long as the method may be utilized in the art for preparing a composite of $Li_2S$ and the carbon-based material. The method of preparing the composite of $Li_2S$ and the carbon-based material may include, for example, milling, heat treatment, deposition, and/or the like, but one or more embodiments are not necessarily limited thereto. Here, any suitable method may be used as long as the method may be used in the art.

The composite of $Li_2S$, the carbon-based material, and the solid electrolyte may include the carbon-based material and the solid electrolyte. The carbon-based material may be defined as for the above-described $Li_2S$-containing composite. As the solid electrolyte, for example, any material may be utilized as long as the material may be utilized as an ion-conductive material. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from sulfide-based solid electrolytes utilized in an electrolyte layer. For example, the sulfide-based solid electrolyte may have an ionic conductivity of about $1\times10^{-5}$ S/cm or more at room temperature. The oxide-based solid electrolyte may include, for example, Li, O, and a transition metal element and may optionally further include other elements. For example, the oxide-based solid electrolyte may be a solid electrolyte having an ionic conductivity of about $1\times10^{-5}$ S/cm or more at room temperature. The oxide-based solid electrolyte may be selected from oxide-based solid electrolytes utilized in an electrolyte layer.

The composite of $Li_2S$ and the solid electrolyte may include the solid electrolyte. The solid electrolyte may be defined as for the above-described composite of $Li_2S$, the carbon-based material, and the solid electrolyte.

The composite of $Li_2S$ and the lithium salt may include $Li_2S$ and the lithium salt. The lithium salt may be defined as for the above-described lithium salt of the composite cathode active material. The lithium salt may include at least one lithium halide compound selected from among LiF, LiCl, LiBr, and LiI. The composite of $Li_2S$ and the lithium salt may be, for example, a composite of $Li_2S$ and a lithium halide. The composite of $Li_2S$ and the lithium salt may include a lithium halide compound and thus may provide further improved ionic conductivity. The composite of $Li_2S$ and the lithium salt may be distinguished from a simple mixture of $Li_2S$, a carbon-based material, and a lithium salt. A simple mixture of $Li_2S$ and a lithium salt may fail to maintain a dense interface between $Li_2S$ and the lithium salt to provide high interfacial resistance, resulting in a reduction in lifespan characteristics of an all-solid secondary battery.

The composite of $Li_2S$ and the metal carbide may include the metal carbide. The metal carbide may be, for example, a two-dimensional metal carbide. The two-dimensional metal carbide may be represented, for example, by $M_{n+1}C_nT_x$, wherein M is a transition metal, T is an end group, T is O, OH, and/or F, n=1, 2, or 3, and x is the number of end groups. The two-dimensional metal carbide may be, for example, $Ti_2CT_x$, $(Ti_{0.5}, Nb_{0.5})_2CT_x$, $Nb_2CT_x$, $V_2CT_x$, $Ti_3C_2T_x$, $(V_{0.5}, Cr_{0.5})_3C_2T_x$, $Ti_3CNT_x$, $Ta_4C_3T_x$, $Nb_4C_3T_x$, or a combination thereof. A surface of the two-dimensional metal carbide

may be terminated with O, OH, and/or F.

The composite of $Li_2S$, the carbon-based material, and the metal carbide may include the carbon-based material and the metal carbide. The carbon-based material may be defined as for the above-described composite of $Li_2S$ and the carbon-based material. The metal carbide may be defined as for the above-described composite of $Li_2S$ and the metal carbide.

The composite of $Li_2S$ and the metal nitride may include the metal nitride. The metal nitride may be, for example, a two-dimensional metal nitride. The two-dimensional metal nitride may be represented, for example, by $M_{n+1}N_nT_x$, wherein M is a transition metal, T is an end group, T is O, OH, and/or F, n=1, 2, or 3, and x is the number of end groups. A surface of the two-dimensional metal nitride may be terminated with O, OH, and/or F.

The composite of $Li_2S$, the carbon-based material, and the metal nitride may include the carbon-based material and the metal nitride. The carbon-based material may be defined as for the above-described composite of $Li_2S$ and the carbon-based material. The metal carbide may be defined as for the above-described composite of $Li_2S$ and the metal nitride.

For example, the cathode active material layer 12 may additionally include a sulfide-based compound that is distinguished from the above-described $Li_2S$-containing composite. The sulfide-based compound may be, for example, a compound including a sulfur element and a metal element other than Li. For example, the sulfide-based compound may be a compound including a sulfur element and at least one of metal elements which have an atomic weight of 10 or more and belong to Groups 1 to 14 of the periodic table of elements. The sulfide-based compound may be, for example, $FeS_2$, $VS_2$, NaS, MnS, FeS, NiS, CuS, or a combination thereof. The cathode active material layer 12 may additionally include the sulfide-based compound so that the cycle characteristics of a lithium battery may be further improved. A content (e.g., amount) of the sulfide-based compound included in the cathode active material layer 12 may be about 10 wt% or less, about 5 wt% or less, about 3 wt% or less, or about 1 wt% or less of the total weight of the cathode active material layer 12.

**Metal-organic framework**

A size of the metal-organic framework may be in a range of about 1 nm to about 1 $\mu$m.

In a lithium battery adopting sulfur (S), it is very difficult to suppress or reduce the generation of hydrogen sulfide itself, and thus it is required to eject hydrogen sulfide to the outside. In a lithium battery adopting a general sulfide-based solid electrolyte and lithium sulfide, if (e.g., when) lithium dendrites grow, mechanical properties may deteriorate.

In other embodiments, the cathode 10 for a lithium battery according to embodiments may include the metal-organic framework, and thus hydrogen sulfide ($H_2S$), which is generated due to sulfur (S) being exposed to moisture, may be adsorbed at the same time as hydrogen sulfide ($H_2S$) is generated, which may lower a rate at which hydrogen sulfide ($H_2S$) is generated externally, thereby obtaining an effect of reducing a decrease in ionic conductivity. In some embodiments, a lithium battery, in which the generation of hydrogen sulfide ($H_2S$) is reduced and internal resistance is improved, may be easily manufactured.

A content (e.g., amount) of the metal-organic framework in the cathode active material layer 12 may be in a range of about 0.1 parts by weight to about 50 parts by weight, for example, about 0.1 parts by weight to about 20 parts by weight, for example, about 1 part by weight to about 10 parts by weight, or for example, about 1 part by weight to about 5 parts by weight with respect to the total weight of the cathode active material layer 12. If (e.g., when) the content (e.g., amount) of the metal-organic framework in the cathode active material layer 12 is in such a range, hydrogen sulfide generated in a lithium battery may be well captured inside the metal-organic framework, thereby preventing or reducing problems caused by hydrogen sulfide generation in advance.

A function of capturing hydrogen sulfide in the cathode active material layer 12 according to embodiments may vary according to the size, uniformity, pore size, and/or the like of the metal-organic framework. The size and uniformity of the metal-organic framework may be controlled or selected to minimize or reduce a decrease in mechanical properties such as ionic conductivity and strength if (e.g., when) sulfur (S) included in the cathode active material layer 12 is exposed to moisture.

A substantially uniform nano-sized metal-organic framework may be utilized to minimize or reduce decreases in ionic conductivity and strength during a process of preparing the cathode active material layer 12 by allowing the metal-organic framework and lithium sulfide ($Li_2S$) contained in the cathode active material to become a composite. The size of the metal-organic framework may be in a range of about 1 nm to about 1 $\mu$m, or for example, about 100 nm to about 500 nm. In the present specification, a size may refer to a major axis length. For example, if (e.g., when) the metal-organic framework is in a different form, the size may refer a length of the largest side of a structure. If (e.g., when) the metal-organic framework is spherical, the size may refer to an average diameter.

For example, a specific surface area of the metal-organic framework may be about 100 $m^2/g$ or more, for example, about 500 $m^2/g$ or more, or for example, in a range of about 100 $m^2/g$ to about 4,500 $m^2/g$. The metal-organic framework may have a wide specific surface area in such a range, and thus ionic conductivity may be improved at room temperature.

For example, the pore size of the metal-organic framework may be in a size range capable of capturing hydrogen sulfide. A pore size may refer to an average diameter of pores if (e.g., when) the pores are spherical and may refer to a major axis length if (e.g., when) the pores have a different shape. The pore size may be, for example, in a range of about 1 nm to about 10 nm, for example, about 1 nm to about 8 nm, or for example, about 1 nm to about 5 nm. In some embodiments, the metal-organic framework may have a mesoporous structure with a substantially uniform pore size. The metal-organic framework may be in a form of a plurality of primary particles dispersed in a matrix, and the plurality of primary particles may have a size (diameter) having a substantially uniform size (diameter) distribution represented by Inequation 1.

The metal-organic framework according to embodiments may have a substantially uniform size represented by Inequation 1. For example, the metal-organic framework may have a diameter distribution close to an average particle diameter. An electrolyte including such a metal-organic framework may have improved mechanical properties and also may reduce the crystallinity of a polymer matrix for providing a polymer electrolyte, thereby having excellent or suitable ionic conductivity at room temperature and excellent or suitable electrochemical safety.

Inequation 1

$$0.0 < \sigma 2/\mu < 1.0$$

In Inequation 1, σ2 may denote a variance of the plurality of primary particles measured by utilizing dynamic laser scattering, and for example. For example, σ2 may denote the variance of the primary particles of the metal-organic framework, wherein the variance may correspond to a value equivalent to a square value of a standard deviation of an average particle diameter of the primary particles of the metal-organic framework. For example, μ may denote the average particle diameter of the plurality of primary particles.

The average particle diameter of the plurality of primary particles described above may be in a range of about 1 nm to about 1 μm, for example, about 10 nm to about 900 nm, about 100 nm to about 800 nm, or for example, about 300 nm to about 500 nm. A shape of the primary particle may include one or more suitable shapes such as a spherical shape, an oval shape, a cylindrical shape, a triangular shape, a quadrangular shape, and a polyhedral shape, but the plurality of primary particles may have one shape. For example, the plurality of primary particles may be spherical. In Inequation 1, σ2/μ may be in a range of about 0.01 to about 0.5, or for example, about 0.1 to about 0.3.

In the cathode active material layer 12 according to embodiments, the metal-organic framework may include a porous crystalline compound formed through a chemical bond between an organic ligand and a metal ion of (e.g., an metal ion selected from among the metals of) Group 2 to Group 15 of the periodic table or a metal ionic cluster of (e.g., two or more metal ions selected from among metals) Group 2 to Group 15 of the periodic table. In this way, the metal-organic framework may have pores.

For example, the organic ligand may refer to an organic group capable of providing a chemical bond such as a coordination bond, an ionic bond, or a covalent bond. For example, the organic ligand may include two or more sites that may be bonded to the above-described metal ion. For example, the organic group may be bonded to the metal ion to form a stable structure.

The metal ion of Group 2 to Group 5 of the periodic table may include at least one selected from among cobalt (Co), nickel (Ni), molybdenum (Mo), tungsten (W), ruthenium (Ru), osmium (Os), cadmium (Cd), beryllium (Be), calcium (Ca), barium (Ba), strontium (Sr), iron (Fe), manganese (Mn), chromium (Cr), vanadium (V), aluminum (Al), titanium (Ti), zirconium (Zr), copper (Cu), zinc (Zn), magnesium (Mg), hafnium (Hf), niobium (Nb), tantalum (Ta), rhenium (Re), rhodium (Rh), iridium (Ir), palladium (Pd), platinum (Pt), silver (Ag), scandium (Sc), yttrium (Y), indium (In), thallium (Tl), silicon (Si), germanium (Ge), tin (Sn), lead (Pb), arsenic (As), antimony (Sb), bismuth (Bi), and a combination thereof. The organic ligand may be a group derived from at least one selected from among aromatic dicarboxylic acid, aromatic tricarboxylic acid, an imidazole-based compound, a tetrazole-based compound, 1,2,3-triazole, a 1,2,4-triazole-based compound, pyrazole, aromatic sulfonic acid, aromatic phosphoric acid, aromatic sulfinic acid, aromatic phosphinic acid, bipyridine, and a compound having at least one functional group selected from among an amino group, an imino group, an amide group, a methanedithioic acid group ($-CS_2H$), a methanedithioic acid anion group ($-CS_2-$), a pyridine group, and a pyrazine group.

Examples of the above-described aromatic dicarboxylic acid and aromatic tricarboxylic acid may include benzene dicarboxylic acid, benzene tricarboxylic acid, biphenyl dicarboxylic acid, terphenyl-dicarboxylic acid, and/or the like.

The above-described organic ligand may be a group derived from, for example, a compound represented by one of formulas (e.g., selected from among):

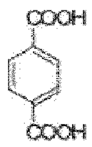
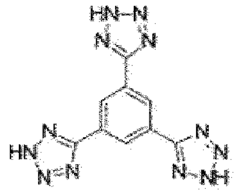
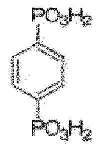
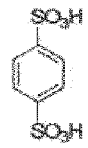

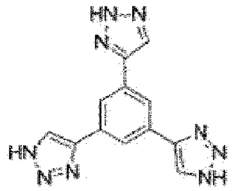
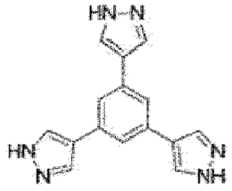
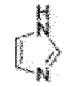
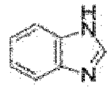
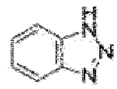
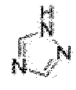

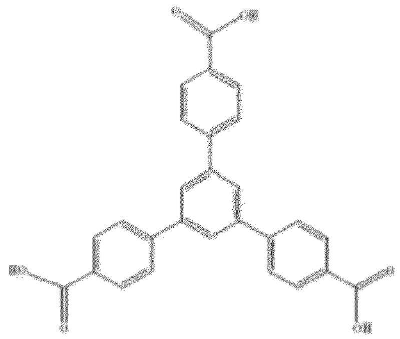
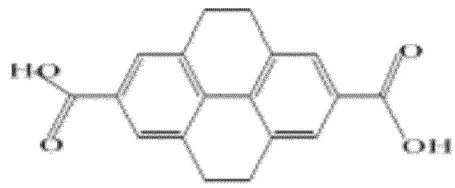

For example, the metal-organic framework may include a compound represented by Formula 1.

Formula 1 $M_mO_kX_lL_p$

In Formula 1, M may be at least one selected from among $Ti^{4+}$, $Zr^{4+}$, $Mn^{4+}$, $Si^{4+}$, $Al^{3+}$, $Cr^{3+}$, $V^{3+}$, $Ga^{3+}$, $Mn^{3+}$, $Zn^{3+}$, $Mn^{2+}$, $Mg^{2+}$, $Fe^{2+}$, $Fe^{3+}$ and $Cu^{2+}$; m may be an integer from 1 to 10; k may be 0 or an integer from 1 to 10; l may be 0 or an integer from 1 to 10; p may be an integer from 1 to 10; X may be $OH^-$, $Cl^-$, $F^-$, $I^-$, $Br^-$, $SO_4^{2-}$, $NO_3^-$, $ClO_4^-$, $PF_6^-$, $BF_3^-$, $-(COO)_n^-$, $R_1-(SO_3)_n^-$, or $R_1-(PO_3)_n^-$; $R_1$ may be at least one selected from among hydrogen and a C1-C30 alkyl group; n may be an integer from 1 to 4; L may be a ligand containing q carboxylate groups (*COO-#) and a radical R; q may be an integer from 1 to 6; * may denote a binding position of a carboxylate group with respect to R; # may denote a binding position of a carboxylate group with respect to a metal ion M; and R may be selected from among substituted or unsubstituted C1-C30 alkyl, substituted or unsubstituted C2-C30 alkenyl, substituted or unsubstituted C2-C30 alkynyl, substituted or unsubstituted mono- and polycyclic-C1-C30 aryl, and substituted or unsubstituted mono- and polycyclic-C1-C30 heteroaryl.

In Formula 1, m may be 1, 2, 3, or 4, for example, 1 or 3. k and l may each be 0, 1, 2, 3 or 4, for example, 0 or 1. p may be 1,2 3 or 4, for example, 1 or 3.

In the definition of R, substituted C1-C30 alkyl, substituted C2-C30 alkene, substituted C2-C30 alkynyl, substituted mono- and polycyclic-C1-C30 aryl, and mono- and polycyclic-C1-C30 heteroaryl may have at least one substituent selected from among C1-C10 alkyl, C2-C10 alkenyl, C2-C10 alkynyl, a C3-C10 carbon ring, C1-C10 heteroalkyl, C1-C10 haloalkyl, C6-C10 aryl, C3-C10 heteroaryl, a C5-C30 hetero ring, C1-C10 alkoxy, C6-C10 aryloxy, C3-C10 heteroaryloxy, C1-C10 alkylthio, C1-C10 heteroalkylthio, C6-C10 arylthio, C3-C10 heteroarylthio, a halogen atom, -CN, $-CF_3$, -OH, $-CHCl_2$, $-CH_2OH$, $-CH_2CH_2OH$, $-NH_2$, $-CH_2NH_2$, -COOH, - $COONH_2$,$-SO_3H$, $-CH_2SO_2CH_3$, $-PO_3H_2$, a C1-C30 alkyl group substituted with a halogen atom (for example, $CCF_3$, $CHCF_2$, $CH_2F$, $CCl_3$, and/or the like), C1-C30 alkoxy, C2-C30 alkoxyalkyl, a hydroxyl group, a nitro group, a cyano group, an amino group, an amidino group, hydrazine, hydrazone, a carboxyl group or a salt thereof (e.g., a metal carboxylate salt), a sulfonyl group, a sulfamoyl group, a sulfonic acid group or a salt thereof, a phosphoric acid or a salt thereof, a C1-C30 alkyl group, a C2-C30 alkenyl group, a C2-C30 alkynyl group, a C1-C30 heteroalkyl group, a C6-C30 aryl group, a C6-C30 arylalkyl group, a C6-C30 heteroaryl group, a C7-C30 heteroarylalkyl group, a C6-C30 heteroaryloxy group, a C6-C30 heteroaryloxyalkyl group, and a C6-C30 heteroarylalkyl group.

The metal-organic framework may be a compound represented by Formula 2.

Formula 2 $M'_mO_kX'_lL'_p$

In Formula 2, M' may be at least one selected from among $Ti^{4+}$, $Zr^{4+}$, $V^{3+}$, $Zn^{+3}$, $Fe^{2+}$, $Fe^{3+}$, and $Cu^{2+}$, L' may be at least one selected from among $C_6H_4(CO_2^-)_2$ (terephthalate), $C_2H_2(CO_2^-)_2$ (fumarate), $C_4H_4(CO_2^-)_2$ (muconate), $C_5H_3S(CO_2^-)_2$ (2,5-thiophenedicarboxylate), $C_6H_2N_2(CO_2)_2$ (2,5-pyrazine dicarboxylate), $C_2H_4(CO_2^-)_2$ (succinate), $C_3H_6(CO_2^-)_2$ (glutarate), $C_4H_8(CO_2^-)_2$ adipate, $C_{10}H_6(CO_2^-)_2$ (naphtalene-2,6-dicarboxylate), $C_{12}H_8(CO_2^-)_2$ (biphenyl-4,4'-dicarboxylate), $C_{12}H_8N_2(CO_2^-)_2$ (azobenzenedicarboxylate), $C_6H_3(CO_2^-)_3$(benzene-1,2,4-tricarboxylate), $C_6H_3(CO_2^-)_3$ (benzene-1,3,5-tricarboxylate), $C_{24}H_{15}(CO_2^-)_3$(benzene-1,3,5-tribenzoate), $C_6H_2(CO_2)_4$(benzene-1,2,4,5-tetracarboxylate, $C_{10}H_4(CO_2^-)_4$(naphtalene-2,3,6,7-tetracarboxylate), $C_{10}H_4(CO_2^-)_4$(naphtalene-1,4,5,8-tetracarboxylate), and $C_{12}H_6(CO_2^-)_4$(biphenyl-3,5,3',5'-tetracarboxylate), X' may be at least one selected from among OH-, $Cl^-$, $F^-$, $CH_3COO^-$, $PF_6^-$, and $ClO_4^-$, m may be an integer from 1 to 8, k may be 0 or an integer from 1 to 8, l may be 0 or an integer from 1 to 8, and p may be an integer from 1 to 8.

According to embodiments, the metal-organic framework may include, for example, at least one group selected from among $Ti_8O_8(OH)_4[O_2C\text{-}C_6H_4\text{-}CO_2]_6$, $Ti_8O_8(OH)_4[O_2C\text{-}C_6H_3(NH_2)\text{-}CO_2]_6$, $VO[C_6H_4(CO_2)_2]$, $Al(OH)[C_6H_4(CO_2)_2]$, $Cr(OH)[C_6H_4(CO_2)_2]$, $Al(OH)[C_{10}H_6(CO_2)_2]$, $Al_1O(OH)_{18}(H_2O)_3[C_6H_3\text{-}(CO_2)_3]_6.nH_2O$, $Cr_3OX_l[C_6H_4(CO_2)_2]_3$, wherein X is at least one selected from among H, OH-, $Cl^-$, $F^-$, $CH_3COO^-$, $PF_6^-$, and $ClO_4^-$, and l is 0 or an integer from 1 to 8, $Cr_3OX_l[C_{12}H_8(CO_2)_2]_3$, wherein X is at least one selected from among H, $OH^-$, $Cl^-$, $F^-$, $CH_3COO^-$, $PF_6^-$, and $ClO_4^-$, and l is 0 or an integer from 1 to 8, $Cr_3OX_l[C_6H_3(CO_2)_3]_3$, wherein X is at least one selected from among H, OH-, $Cl^-$, $F^-$, $CH_3COO^-$, $PF_6^-$, and $ClO_4^-$, and l is 0 or an integer from 1 to 8, $Al_8(OH)_{15}(H_2O)_3[C_6H_3(CO_2)_3]_3$, $V_3OX_l[C_6H_3(CO_2)_3]_3$, wherein X is at least selected from among H, OH-, $Cl^-$, $F^-$, $CH_3COO^-$, $PF_6^-$ and $ClO_4^-$, and l is 0 or an integer from 1 to 8, $ZrO[C_5H_4(CO_2)_2]$, and $Ti_8O_8(OH)_4[O_2C\text{-}C_6H_3(NH_2)\text{-}CO_2]_6$.

The metal-organic framework may include, for example, $Ti_8O_8(OH)_4[O_2C\text{-}C_6H_4\text{-}CO_2]_6$, $Cu(bpy)(H_2O)_2(BF_4)_2(bpy)$, wherein bpy=4,4'-bipyridine, $Zn_4O(O_2C\text{-}C_6H_4\text{-}CO_2)_3$ (Zn-terephthalic acid-MOF, Zn-MOF), $Al(OH)\{O_2C\text{-}C_6H_4\text{-}CO_2\}$, Cu-BTC MOF (copper benzene-I,3,5-tricarboxylate, ZIF-8 (2-methyl imidazole zinc salt), MIL 53 (aluminum terephthalate), Fe-BTC (iron 1,3,5-benzenetricarboxylate), KRICT F100 (iron trimesate), KRICT C100 (chromium terephthalate), KRICT C200 (copper trimesate), KRICT Z100 (zirconium carboxylate), or a combination thereof, but one or more embodiments are not necessarily limited thereto.

According to some embodiments, the pore size of the metal-organic framework may be about 5 nm or less. For example, the pore size of the metal-organic framework may be in a range of about 1 nm to about 5 nm, about 1 nm to about 4 nm, or about 1 nm to about 3 nm.

According to some embodiments, the metal-organic framework may have characteristics in which the plurality of primary particles do not agglomerate in a $Li_2S$-containing composite matrix, and particles have substantially uniform sizes and do not agglomerate with each other.

**Cathode: Solid electrolyte**

The cathode active material layer 12 may further include, for example, a solid electrolyte. The solid electrolyte may be, for example, a sulfide-based solid electrolyte. The solid electrolyte included in the cathode 10 may be the same as or different from a solid electrolyte included in an electrolyte layer 30. The solid electrolyte may be as defined in the part of the electrolyte layer 30.

A D50 average particle diameter of the solid electrolyte included in the cathode active material layer 12 may be less than a D50 average particle diameter of the solid electrolyte included in the electrolyte layer 30. For example, the D50 average particle diameter of the solid electrolyte included in the cathode active material layer 12 may be about 90 % or less, about 80 % or less, about 70 % or less, about 60 % or less, about 50 % or less, about 40 % or less, about 30 % or less, or about 20 % or less of the D50 average particle diameter of the solid electrolyte included in the electrolyte layer 30. The D50 average particle diameter may be, for example, a median particle diameter (D50). The median particle diameter (D50) may be a particle size corresponding to an about 50 % cumulative volume if (e.g., when) a particle size distribution measured through a laser diffraction method is calculated from particles having a smaller particle size.

The solid electrolyte may be included at a content (e.g., amount) of about 10 parts by weight to about 60 parts by weight, about 10 parts by weight to about 50 parts by weight, about 20 parts by weight to about 50 parts by weight, or about 30 parts by weight to about 50 parts by weight with respect to 100 parts by weight of the cathode active material layer 12. If (e.g., when) the content (e.g., amount) of the solid electrolyte excessively decreases (e.g., lower than the above ranges), due to an increase in internal resistance of the cathode 10, the cycle characteristics of a secondary battery may deteriorate. If (e.g., when) the content (e.g., amount) of the sulfide-based solid electrolyte excessively increases (e.g., higher than the above ranges), the energy density of a secondary battery may decrease.

**Cathode: Conductive material**

The cathode active material layer 12 may further include a conductive material. The conductive material may be,

for example, a carbon-based conductive material, a metal-based conductive material, or a combination thereof. The carbon-based conductive material may be, for example, graphite, carbon black (CB), acetylene black (AB), Ketjenblack (KB), a carbon fiber, or a combination thereof, but one or more embodiments are not limited thereto. Any material may be utilized as long as the material may be utilized as a carbon-based conductive material in the art. The metal-based conductive material may be a metal powder, metal fiber, or a combination thereof, but one or more embodiments are not limited thereto. Any material may be utilized as long as the material may be utilized as a metal-based conductive material in the art. A content (e.g., amount) of the conductive material included in the cathode active material layer 12 may be, for example, in a range of about 1 wt% to about 30 wt%, about 1 wt% to about 20 wt%, or about 1 wt% to about 10 wt% of the total weight of the cathode active material layer 12.

The cathode active material layer 12 may include a carbon-based material, and the carbon-based material may be disposed only in the composite cathode active material. The cathode active material layer 12 may not additionally include a separate carbon-based material other than the composite cathode active material including the carbon-based material. The cathode active material layer 12 may not include (e.g., may exclude) the separate carbon-based material so that the energy density of the cathode 10 and the lithium battery 1 may be improved and a manufacturing process may be simplified.

**Cathode: Binder**

The cathode active material layer 12 may further include a binder. The binder may include, for example, styrene butadiene rubber (SBR), polytetrafluoroethylene, polyvinylidene fluoride (PVDF), polyethylene (PE), and/or the like, but one or more embodiments are not limited thereto. Any material may be utilized as long as the material may be utilized as a binder in the art. A content (e.g., amount) of the binder included in the cathode active material layer 12 may be, for example, in a range of about 1 wt% to about 10 wt% of the total weight of the cathode active material layer 12. In some embodiments, the binder may not be provided.

**Cathode: Other additives**

In addition to the above-described composite cathode active material, solid electrolyte, binder, and conductive material, the cathode active material layer 12 may further include additives such as a filler, a coating agent, a dispersant, and an ion-conductive adjuvant.

As a filler, a coating agent, a dispersant, an ion-conductive adjuvant, and/or the like that may be included in the cathode active material layer 12. Also, materials generally utilized in electrodes of lithium batteries in the art may be utilized.

**Cathode: Cathode current collector**

The cathode current collector 11 may be provided as a plate, foil, and/or the like consisting of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In some embodiments, the cathode current collector 11 may not be provided. A thickness of the cathode current collector 11 may be, for example, in a range of about 1 μm to about 100 μm, about 1 μm to about 50 μm, about 5 μm to about 25 μm, or about 10 μm to about 20 μm.

The cathode current collector 11 may include, for example, a base film and a metal layer disposed on a side (e.g., one side or two (e.g., opposite) sides) of the base film. The base film may include, for example, a polymer. The polymer may be, for example, a thermoplastic polymer. The polymer may include, for example, polyethylene terephthalate (PET), PE, polypropylene (PP), polybutylene terephthalate (PBT), polyimide (PI), or a combination thereof. The base film may be, for example, an insulator. The base film may include an insulating thermoplastic polymer, and thus, if (e.g., when) a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse and may be cut if (e.g., when) an overcurrent occurs, thereby performing a short circuit prevention function. A thickness of the metal layer may be adjusted to adjust a limit current and a maximum current. The metal layer may be electrodeposited or deposited on the base film. If (e.g., when) the thickness of the metal layer decreases, a limit current and/or a maximum current of the cathode current collector 11 may decrease, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake and the flake and a metal of the

metal layer may include a same material. The metal chip may be, for example, metal foil or a metal mesh. The metal chip may be, for example, aluminum foil, copper foil, or stainless steel (SUS) foil. The metal chip may be disposed on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of about 1 μm to about 50 μm, about 1.5 μm to about 50 μm, about 1.5 μm to about 40 μm, or about 1 μm to about 30 μm. The base film may have a thickness in such a range, and thus a weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of about 0.01 μm to about 3 μm, about 0.1 μm to about 3 μm, about 0.1 μm to about 2 μm, or about 0.1 μm to about 1 μm. The metal layer may have a thickness in such a range, and thus the stability of an electrode assembly may be secured while conductivity is maintained. A thickness of the metal chip may be, for example, in a range of about 2 μm to about 10 μm, about 2 μm to about 7 μm, or about 4 μm to about 6 μm. The metal chip may have a thickness in such a range, and thus the metal layer and the lead tab may be more easily connected. The cathode current collector 11 may have such a structure, and thus a weight of the cathode 10 may be reduced, thereby improving the energy density of the cathode 10 and a lithium battery.

**Cathode: Inactive member**

Referring to FIGS. 4 and 5, the cathode 10 may include the cathode current collector 11 and the cathode active material layer 12 disposed on one side of the cathode current collector 11. An inactive member 40 may be disposed on one side of the cathode 10. Referring to FIG. 4, the inactive member 40 may be disposed on one side of each of the cathode active material layer 12 and the cathode current collector 11. Referring to FIG. 5, the inactive member 40 may be disposed on one side of the cathode active material layer 12 and may be disposed between the electrolyte layer 30 and the cathode current collector 11 opposite to the electrolyte layer 30. The inactive member 40 may not be disposed on one side of the cathode current collector 11. The electrolyte layer 30 may be, for example, a solid electrolyte layer.

The inactive member 40 may be provided to prevent or reduce cracks of the electrolyte layer 30 during manufacturing and/or charging/discharging of the lithium battery 1, thereby improving the cycle characteristics of the lithium battery 1. In the lithium battery 1 that does not include the inactive member 40, a substantially ununiform (e.g., non-uniform) pressure may be applied to the electrolyte layer 30 in contact with the cathode 10 during manufacturing and/or charging/discharging of the lithium battery 1 to cause cracks in the electrolyte layer 30, and a lithium metal may be grown through the cracks to increase a possibility of the occurrence of a short circuit.

In the lithium battery 1, a thickness of the inactive member 40 may be greater than or equal to a thickness of the cathode active material layer 12. In other embodiments, in the lithium battery 1, the thickness of the inactive member 40 may be substantially equal to a thickness of the cathode 10. The thickness of the inactive member 40 may be substantially equal (e.g., equal) to the thickness of the cathode 10, and thus a substantially uniform pressure may be applied between the cathode 10 and the electrolyte layer 30, and the cathode 10 and the electrolyte layer 30 may be in sufficiently close contact with each other, thereby reducing interfacial resistance between the cathode 10 and the electrolyte layer 30. In some embodiments, the electrolyte layer 30 may be sufficiently sintered during a process of pressing and manufacturing the lithium battery 1, thereby reducing the internal resistance of the electrolyte layer 30 and the lithium battery 1 including the same.

The inactive member 40 may surround the side of the cathode 10 and may be in contact with the electrolyte layer 30. The inactive member 40 may surround the side of the cathode 10 and may be in contact with the electrolyte layer 30, thereby effectively suppressing cracks of the electrolyte layer 30, which are caused in a portion of the electrolyte layer 30, which is not in contact with the cathode 10, by a pressure difference during a pressing process. The inactive member 40 may surround the side of the cathode 10 and may be separated from an anode 20, for example, a first anode active material layer 22. The inactive member 40 may surround the side of the cathode 10, may be in contact with the electrolyte layer 30, and may be separated from the anode 20. In some embodiments, a possibility of a short circuit occurring due to physical contact between the cathode 10 and the first anode active material layer 22 or a possibility of a short circuit occurring due to the overcharging of lithium may be suppressed or reduced. For example, the inactive member 40 may be disposed on one side of the cathode active material layer 12 and concurrently (e.g., simultaneously) may be disposed on one side of the cathode current collector 11, thereby more effectively suppressing a possibility of a short circuit occurring due to contact between the cathode current collector 11 and the anode 20.

Referring to FIGS. 4 and 5, the inactive member 40 may extend from one side of the cathode 10 to an end portion (e.g., left or right end portion) of the electrolyte layer 30. The inactive member 40 may extend to the end portion of the

electrolyte layer 30 so that cracks occurring at the end portion of the electrolyte layer 30 may be suppressed or reduced. The end portion of the electrolyte layer 30 may be an outermost portion in contact with a side (e.g., left or right side) of the electrolyte layer 30. The inactive member 40 may extend to the outermost portion in contact with the side of the electrolyte layer 30. The inactive member 40 may be separated from the anode 20, for example, the first anode active material layer 22. The inactive member 40 may extend to the end portion of the electrolyte layer 30 but may not be in contact with the anode 20. For example, the inactive member 40 may fill a space extending from one side (e.g., right or left side) of the cathode 10 to the end portion of the electrolyte layer 30.

Referring FIGS. 4 and 5, a width of the inactive member 40 extending from one side of the cathode 10 to the end portion of the electrolyte layer 30 may be, for example, in a range of about 1 % to about 30 %, about 1 % to about 25 %, about 1 % to about 20 %, about 1 % to about 15 %, about 1 % to about 10 %, or about 1 % to about 5 % of a width (e.g., length) between one side of the cathode 10 and the other side opposite to the one side of the cathode 10. If (e.g., when) the width of the inactive member 40 is excessively wide (e.g., wider than the above ranges), the energy density of the lithium battery 1 may be reduced. If (e.g., when) the width of the inactive member 40 is excessively narrow (e.g., narrower than the above ranges), an effect of arranging the inactive member 40 may be insignificant.

An area of the cathode 10 may be smaller than an area of the electrolyte layer 30 in contact with the cathode 10. The inactive member 40 may be disposed to surround the side of the cathode 10 to compensate for a difference in area between the cathode 10 and the electrolyte layer 30. An area of the inactive member 40 may compensate for the difference between the area of the cathode 10 and the area of the electrolyte layer 30, thereby effectively preventing or reducing cracks of the electrolyte layer 30 caused by a pressure difference during a pressing process. For example, the sum of the area of the cathode 10 and the area of the inactive member 40 may be equal to the area of the electrolyte layer 30. The electrolyte layer 30 may be, for example, a solid electrolyte layer.

The area of the cathode 10 may be, for example, less than about 100 %, about 99 % or less, about 98 % or less, about 97 % or less, about 96 % or less, or about 95 % or less of the area of the electrolyte layer 30. The area of the cathode 10 may be, for example, in a range of about 50 % to less than about 100 %, about 50 % to about 99 %, about 55 % to about 98 %, about 60 % to about 97 %, about 70 % to about 96 %, about 80 % to about 95 %, or about 85 % to about 95 % of the area of the electrolyte layer 30.

If (e.g., when) the area of the cathode 10 is greater than or equal to the area of the electrolyte layer 30, a short circuit may occur due to physical contact between the cathode 10 and the first anode active material layer 22, or a possibility of a short circuit occurring due to the overcharging of lithium may increase. The area of the cathode 10 may be, for example, equal to an area of the cathode active material layer 12. The area of the cathode 10 may be, for example, equal to an area of the cathode current collector 11.

The area of the inactive member 40 may be, for example, about 50 % or less, about 40 % or less, about 30 % or less, about 20 % or less, or about 10 % or less of the area of the cathode 10. The area of the inactive member 40 may be, for example, in a range of about 1 % to about 50 %, about 5 % to about 40 %, about 5 % to about 30 %, about 5 % to about 20 %, or about 5 % to about 15 % of the area of the cathode 10.

An area S1 of the cathode 10 may be smaller than an area S4 of an anode current collector 21. The area S1 of the cathode 10 may be, for example, less than about 100 %, about 99 % or less, about 98 % or less, about 97 % or less, about 96 % or less, or about 95 % or less of the area S4 of the anode current collector 21. The area S1 of the cathode 10 may be, for example, in a range of about 50 % to less than about 100 %, about 50 % to about 99 %, about 55 % to about 98 %, about 60 % to about 97 %, about 70 % to about 96 %, about 80 % to about 95 %, or about 85 % to about 95 % of the area S4 of the anode current collector 21. The area S4 of the anode current collector 21 may be, for example, equal to an area of the anode 20. The area S4 of the anode current collector 21 may be, for example, equal to an area of the first anode active material layer 22.

In the present disclosure, "equal" area, length, width, thickness, and/or shape may include all cases of having "substantially equal" area, length, width, thickness, and/or shape, excluding a case in which areas, lengths, widths, thicknesses, and/or shapes are intentionally different from each other. "Equal" area, length, width, and/or thickness includes a range in which the unintended difference in area, length, width, and/or thickness between compared objects is, for example, less than about 3 %, less than about 2 %, less than about 1 %, less than about 0.5 %, or less than about 0.1 %.

The thickness of the inactive member 40 may be, for example, greater than a thickness of the first anode active material layer 22. The thickness of the first anode active material layer 22 may be, for example, about 50 % or less, about 40 % or less, about 30 % or less, about 20 % or less, or about 10 % or less of the thickness of the inactive member 40. The thickness of the first anode active material layer 22 may be, for example, in a range of about 1 % to about 50 %, about 1 % to about 40 %, about 1 % to about 30 %, about 1 % to about 20 %, or about 1 % to about 10 % of the thickness of the inactive member 40.

The inactive member 40 may be a gasket. By utilizing the gasket as the inactive member 40, cracks of the electrolyte layer 30 caused by a pressure difference during a pressing process may be effectively suppressed or reduced.

The inactive member 40 may have, for example, a single-layer structure. In other embodiments, the inactive member 40 may have a multi-layer structure. In the inactive member 40 having the multi-layer structure, respective layers

may have different compositions. The inactive member 40 having the multi-layer structure may have, for example, a two-layer structure, a three-layer structure, a four-layer structure, or a five-layer structure. The inactive member 40 having the multi-layer structure may include, for example, one or more adhesive layers and one or more support layers. For example, the adhesive layer may effectively prevent or reduce separation between the cathode 10 and the electrolyte layer 30 due to a change in volume of the cathode 10 which occurs during a charging/discharging process of the lithium battery 1 and may provide a binding force between the support layer and other layers to improve the film strength of the inactive member 40. The support layer may provide a supporting force to the inactive member 40, may prevent or reduce the nonuniformity of pressure applied to the electrolyte layer 30 during a pressing process or a charging/discharging process, and may prevent or reduce the shape deformation of the lithium battery 1 to be manufactured.

The inactive member 40 may be, for example, a flame-retardant inactive member. The flame-retardant inactive member may provide flame retardancy to prevent or reduce a possibility of thermal runaway and ignition of the lithium battery 1. In some embodiments, the safety of the lithium battery 1 may be further improved. The flame-retardant inactive member may be configured to absorb residual moisture in the lithium battery 1, thereby preventing or reducing the deterioration of the lithium battery 1 and improving the lifespan characteristics of the lithium battery 1.

The flame-retardant inactive member may include, for example, a matrix and a filler. The matrix may include, for example, a substrate and a reinforcing material. The matrix may include, for example, a fibrous substrate and a fibrous reinforcing material. The matrix may include the substrate to have elasticity. In some embodiments, the matrix may effectively accommodate a change in volume of the lithium battery 1 during charging/discharging and may be disposed at any one of one or more suitable positions. The substrate included in the matrix may include, for example, a first fibrous material. By including the first fibrous material, the substrate may effectively accommodate a change in volume of the cathode 10 which occurs during a charging/discharging process of the lithium battery 1 and may effectively suppress or reduce the deformation of the inactive member 40 due to the change in volume of the cathode 10. The first fibrous material may be, for example, a material having an aspect ratio of about 5 or more, about 20 or more, or about 50 or more. The first fibrous material may be, for example, a material having an aspect ratio of about 5 to about 1,000, about 20 to about 1,000, or about 50 to about 1,000. The first fibrous material may be, for example, an insulating material. The first fibrous material may be the insulating material, and thus a short circuit between the cathode 10 and the anode 20, which occur due to lithium dendrites and/or the like during charging/discharging of the lithium battery 1, may be effectively prevented or reduced. The first fibrous material may include, for example, at least one selected from among pulp fiber, insulating polymer fiber, and ion-conductive polymer fiber. The matrix may include the reinforcing material, and thus the strength of the matrix may be improved. In some embodiments, the matrix may prevent or reduce an excessive change in volume of the lithium battery 1 during changing/discharging and may prevent or reduce the deformation of the lithium battery 1. The reinforcing material included in the matrix may include, for example, a second fibrous material. The reinforcing material may include the second fibrous material, and thus the strength of the matrix may increase more uniformly. The second fibrous material may be, for example, a material having an aspect ratio of about 3 or more, about 5 or more, or about 10 or more. The second fibrous material may be, for example, a material having an aspect ratio of about 3 to about 100, about 5 to about 100, or about 10 to about 100. The second fibrous material may be, for example, a flame-retardant material. The second fibrous material may be the flame-retardant material, and thus ignition due to thermal runaway occurring during a charging/discharging process of the lithium battery 1 or an external impact may be effectively suppressed or reduced. The second fibrous material may include, for example, glass fiber, metal oxide fiber, or ceramic fiber.

The flame-retardant inactive member may include a filler in addition to the matrix. The filler may be disposed in the matrix, on a surface of the matrix, or both (e.g., simultaneously) in the matrix and on the surface. The filler may include, for example, an inorganic material. The filler included in the flame-retardant inactive member may be, for example, a moisture getter. For example, the filler may adsorb moisture at a temperature of less than about 100 °C to remove moisture remaining in the lithium battery 1, thereby preventing or reducing the deterioration of the lithium battery 1. In some embodiments, if (e.g., when) a temperature of the lithium battery 1 increases to about 150 °C or more due to thermal runaway occurring during a charging/discharging process of the lithium battery 1 or an external impact, the filler may release the adsorbed moisture to effectively suppress or reduce ignition of the lithium battery 1. In other embodiments, the filler may be, for example, a flame retardant. The filler may include, for example, a metal hydroxide having moisture adsorption properties. The metal hydroxide included in the filler may be, for example, $Mg(OH)_2$, $Fe(OH)_3$, $Sb(OH)_3$, $Sn(OH)_4$, $Tl(OH)_3$, $Zr(OH)_4$, $Al(OH)_3$ or a combination thereof. A content (e.g., amount) of the filler included in the flame-retardant inactive member may be, for example, in a range of about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight with respect to about 100 parts by weight of the flame-retardant inactive member.

The flame-retardant inactive member may further include, for example, a binder. The binder may include, for example, a curable polymer or a non-curable polymer. The curable polymer may be a polymer that is cured by heat and/or pressure. The curable polymer may be, for example, a solid at room temperature. The flame-retardant inactive member

may include, for example, a heat-press curable film and/or a cured product thereof. A heat-press curable polymer may be, for example, TSA-66 by Toray.

The flame-retardant inactive member may additionally include other materials in addition to the above-described substrate, reinforcing material, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as PP or PE.

A density of the substrate or the reinforcing material included in the flame-retardant inactive member may be, for example, in a range of about 10 % to about 300 %, about 10 % to about 150 %, about 10 % to about 140 %, about 10 % to about 130 %, or about 10 % to about 120 % of a density of the composite cathode active material included in the cathode active material layer 12.

The inactive member 40 may be a member that does not include an electrochemically active material, for example, an electrode active material. The electrode active material may be a material that absorbs/desorbs lithium. The inactive member 40 may be a member consisting of a material utilized in the art other than an electrode active material.

## Lithium battery

A lithium battery according to embodiments may include the above-described cathode, an anode, and an electrolyte layer disposed between the cathode and the anode. The anode may include an anode current collector and a first anode active material layer disposed on one side of the anode current collector.

Referring to FIGS. 1 to 5, a lithium battery 1 may include a cathode 10, an anode 20, and an electrolyte layer 30 disposed between the cathode 10 and the anode 20. The anode 20 may include an anode current collector 21 and a first anode active material layer 22 disposed on one side of the anode current collector 21.

## Cathode

The cathode 10 may be defined as for the above-described cathode.

## Anode

According to embodiments, the anode 20 may include a lithiophilic material. For example, the lithiophilic material may be an anode material that may form an alloy or compound together with lithium. For example, the anode 20 may include the lithiophilic material, and thus an alloy with lithium or a lithium metal may be precipitated on the anode 20 during charging of the lithium battery 1.

## Anode: Anode active material

Referring to FIGS. 1 to 5, the anode 20 may include the first anode active material layer 22. The first anode active material layer 22 may include, for example, an anode active material and a binder.

The anode active material included in the first anode active material layer 22 may include a lithiophilic material. The anode active material included in the first anode active material layer 22 may have, for example, a particle form. An average particle diameter of the anode active material having the particle form may be, for example, about 4 μm or less, about 3 μm or less, about 2 μm or less, about 1 μm or less, about 500 nm or less, about 300 nm or less, or about 100 nm or less. The average particle diameter of the anode active material having the particle form may be, for example, in a range of about 10 nm to about 4 μm, about 10 nm to about 3 μm, about 10 nm to about 2 μm, about 10 nm to about 1 μm, about 10 nm to about 500 nm, about 10 nm to about 300 nm, or about 10 nm to about 100 nm. The anode active material may have an average particle diameter in such a range, and thus the reversible absorbing and/or desorbing of lithium may become easier during charging/discharging. The average particle diameter of the anode active material may be, for example, a median diameter (D50) measured by utilizing a laser type or kind particle size distribution meter.

For example, the lithiophilic material may include at least one selected from among a carbon-based anode active material and a metal or metalloid anode active material.

The carbon-based anode active material may include, for example, amorphous carbon, crystalline carbon, porous carbon, or a combination thereof.

The carbon-based anode active material may be, for example, amorphous carbon. Examples of the amorphous carbon may include CB, AB, furnace black (FB), KB, graphene, and/or the like, but one or more embodiments are not necessarily limited thereto. Any material may be utilized as long as the material may be classified as amorphous carbon in the art. The amorphous carbon may be carbon that has no crystallinity or very low crystallinity and may be distinguished from crystalline carbon or graphite-based carbon.

The carbon-based anode active material may be, for example, porous carbon. A pore volume of the porous carbon may be, for example, in a range of about 0.1 cubic centimeter per gram (cc/g) to about 10.0 cc/g, about 0.5 cc/g to about 5 cc/g, or about 0.1 cc/g to about 1 cc/g. An average pore diameter of the porous carbon may be, for example, in a range of about 1 nm to about 50 nm, about 1 nm to about 30 nm, or about 1 nm to about 10 nm. A Brunauer-Emmett-Teller (BET) specific surface area of the porous carbon may be, for example, in a range of about 100 square meter per gram ($m^2/g$) to about 3,000 $m^2/g$.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any material may be utilized as long as the material may be utilized as a metal anode active material or a metalloid anode active material which forms an alloy or compound together with lithium in the art. For example, nickel (Ni) may not form an alloy together with lithium and thus may not be a metal anode active material.

The first anode active material layer 22 may include one type or kind of anode active material among such anode active materials or a mixture of a plurality of different anode active materials. For example, the first anode active material layer 22 may include only amorphous carbon or may include at least one selected from among gold (Au), platinum (Pt), palladium (Pd), silicon (Si), silver (Ag), aluminum (Al), bismuth (Bi), tin (Sn), and zinc (Zn). In other embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of a mixture of amorphous carbon and gold and/or the like may be a weight ratio that is, for example, in a range of about 99:1 to about 1:99, about 10:1 to about 1:2, about 5:1 to about 1:1, or about 4:1 to about 2:1, but one or more embodiments are not limited to such a range. The mixing ratio may be selected according to the required characteristics of the lithium battery 1. The anode active material may have such a composition, and thus the cycle characteristics of the lithium battery 1 may be further improved.

The anode active material included in the first anode active material layer 22 may include, for example, a mixture of first particles consisting of amorphous carbon and second particles consisting of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In other embodiments, the metalloid may be a semiconductor. A content (e.g., amount) of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt% with respect to the total weight of the mixture. The second particles may have a content (e.g., amount) in such a range, and thus, for example, the cycle characteristics of the lithium battery 1 may be further improved.

In other embodiments, the first anode active material layer 22 may include a composite anode active material. For example, the composite anode active material may include a lithiophilic material. For example, the composite anode active material may include a carbon-based support and a metal-based anode active material supported on the carbon-based support as lithiophilic materials. The composite anode active material may have such a structure so that the localization of the metal-based anode active material in the first anode active material layer 22 may be prevented or reduced, and the substantially uniform distribution thereof may be obtained. In some embodiments, the cycle characteristics of the lithium battery 1 including the first anode active material layer 22 may be further improved.

As the lithiophilic material, the metal-based anode active material supported on the carbon-based support may include, for example, a metal, a metal oxide, a composite of a metal and a metal oxide, or a combination thereof. Examples of the metal may include gold (Au), platinum (Pt), palladium (Pd), silicon (Si), silver (Ag), aluminum (Al), bismuth (Bi), tin (Sn), and tellurium (Te), zinc (Zn), and/or the like. Examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, zinc (Zn) oxide, and/or the like. The metal oxide may include, for example, $Au_xO_y$, wherein $0<x\leq2$ and $0<y\leq3$, $Pt_xO_y$, wherein $0<x\leq1$ and $0<y\leq2$, $Pd_xO_y$, wherein $0<x\leq1$ and $0<y\leq1$, $Si_xO_y$, wherein $0<x\leq1$ and $0<y\leq2$, $Ag_xO_y$, wherein $0<x\leq2$ and $0<y\leq1$, $Al_xO_y$, wherein $0<x\leq2$ and $0<y\leq3$, $Bi_xO_y$, wherein $0<x\leq2$ and $0<y\leq3$, $Sn_xO_y$, wherein $0<x\leq1$ and $0<y\leq2$, $Te_xO_y$, wherein $0<x\leq1$ and $0<y\leq3$, $Zn_xO_y$, wherein $0<x\leq1$ and $0<y\leq1$, or a combination thereof. The composite of the metal and the metal oxide may include, for example, a composite of Au and $Au_xO_y$, wherein $0<x\leq2$ and $0<y\leq3$, a composite of Pt and $Pt_xO_y$, wherein $0<x\leq1$ and $0<y\leq2$, a composite of Pd and $Pd_xO_y$, wherein $0<x\leq1$ and $0<y\leq1$, a composite of Si and $Si_xO_y$, wherein $0<x\leq1$ and $0<y\leq2$, a composite of Ag and $Ag_xO_y$, wherein $0<x\leq2$ and $0<y\leq1$, a composite of Al and $Al_xO_y$, wherein $0<x\leq2$ and $0<y\leq3$, a composite of Bi and $Bi_xO_y$, wherein $0<x\leq2$ and $0<y\leq3$, a composite of Sn and $Sn_xO_y$, wherein $0<x\leq1$ and $0<y\leq2$, a composite of Te and $Te_xO_y$, wherein $0<x\leq1$ and $0<y\leq3$, a composite of Zn and $Zn_xO_y$, wherein $0<x\leq1$ and $0<y\leq1$, or a combination thereof.

According to some embodiments, as the lithiophilic material, the carbon-based support may be, for example, amorphous carbon. Examples of the amorphous carbon may include CB, AB, FB, KB, graphene, activated carbon, CNFs, CNTs, and/or the like, but one or more embodiments are not necessarily limited thereto. Any material may be utilized as long as the material may be classified as amorphous carbon in the art. The amorphous carbon may be carbon that has no crystallinity or very low crystallinity and may be distinguished from crystalline carbon or graphite-based carbon. A

carbonaceous material may be, for example, a carbon-based anode active material.

According to some embodiments, the composite anode active material may have, for example, a particle form. A particle diameter of the composite anode active material having the particle form may be, for example, in a range of about 10 nm to about 4 μm, about 10 nm to about 1 μm, about 10 nm to about 500 nm, about 10 nm to about 200 nm, or about 10 nm to about 100 nm. The composite anode active material may have a particle diameter in such a range, and thus the reversible absorbing and/or desorbing of lithium may become easier during charging/discharging. The metal-based anode active material supported on the carbon-based support may have, for example, a particle form. A particle diameter of the metal-based anode active material may be, for example, in a range of about 1 nm to about 200 nm, about 1 nm to about 150 nm, about 5 nm to about 100 nm, or about 10 nm to about 50 nm. The carbon-based support may have, for example, a particle form. A particle diameter of the carbon-based support may be, for example, in a range of about 10 nm to about 2 μm, about 10 nm to about 1 μm, about 10 nm to about 500 nm, about 10 nm to about 200 nm, or about 10 nm to about 100 nm. The carbon-based support may have a particle diameter in such a range and thus may be more uniformly disposed in the first anode active material layer 22. The carbon-based support may include, for example, nanoparticles having a particle diameter of about 500 nm or less. The particle diameter of the composite anode active material, the particle diameter of the metal-based anode active material, and the particle diameter of the carbon-based support may each be, for example, an average particle diameter. The average particle diameter may be, for example, a median diameter (D50) measured by utilizing a laser type or kind particle size distribution meter. In other embodiments, the average particle diameter may be determined automatically by utilizing software, for example, from an electron microscope image or may be manually determined according to a manual.

**Anode: Binder**

A binder included in the first anode active material layer 22 may be, for example, SBR, polytetrafluoroethylene, PVDF, PE, a vinylidene fluoride/hexafluoropropylene copolymer, polyacrylonitrile (PAN), polymethyl methacrylate, and/or the like, but one or more embodiments are not necessarily limited thereto. Any material may be utilized as long as the material may be utilized as a binder in the art. The binder may be provided as a single binder or a plurality of different binders.

The first anode active material layer 22 may include the binder and thus may be stabilized on the anode current collector 21. In some embodiments, cracks of the first anode active material layer 22 may be suppressed or reduced despite changes in volume and/or relative position of the first anode active material layer 22 during a charging/discharging process. For example, if (e.g., when) the first anode active material layer 22 does not include a binder, the first anode active material layer 22 may be easily separated from the anode current collector 21. At a portion of the anode current collector 21 exposed due to the separation of the first anode active material layer 22 from the anode current collector 21, the anode current collector 21 may be in contact with the electrolyte layer 30, which may cause an increase in possibility of the occurrence of a short circuit. The first anode active material layer 22 may be formed, for example, by applying a slurry, in which a material constituting the first anode active material layer 22 is dispersed, onto the anode current collector 21 and drying the slurry. The first anode active material layer 22 may include the binder, and thus an anode active material may be stably distributed in the slurry. For example, if (e.g., when) the slurry is applied onto the anode current collector 21 through screen printing, the clogging of a screen (for example, clogging by aggregates of an anode active material) may be suppressed or reduced.

**Anode: Other additives**

The first anode active material layer 22 may further include additives utilized in the lithium battery 1, such as a filler, a coating agent, a dispersant, and a conductive adjuvant according to a related art.

According to other embodiments, the first anode active material layer 22 may further include the above-described metal-organic framework.

**Anode: Solid electrolyte**

The first anode active material layer 22 may further include a solid electrolyte. The solid electrolyte may be, for example, a material selected from among solid electrolytes included in the electrolyte layer 30. The solid electrolyte included in the first anode active material layer 22 may serve as a reaction point at which a lithium metal starts to be formed in the first anode active material layer 22, may serve as a space in which the formed lithium metal is stored, or may serve as a path through which lithium ions are transferred. In some embodiments, the solid electrolyte may not be provided.

In the first anode active material layer 22, for example, a content (e.g., amount) of the solid electrolyte may be high in a region adjacent to the electrolyte layer 30 and may be low in a region adjacent to the anode current collector 21. The solid electrolyte in the first anode active material layer 22 may have, for example, a concentration gradient in which a

concentration decreases from the region adjacent to the electrolyte layer 30 to the region adjacent to the anode current collector 21.

**Anode: First anode active material layer**

A ratio B/A of an initial charge capacity B of the first anode active material layer 22 to an initial charge capacity A of the cathode active material layer 12 may be in a range of about 0.005 to about 0.45. The initial charge capacity of the cathode active material layer 12 may be determined at a maximum charging voltage vs. $Li/Li^+$ from a 1st open circuit voltage (OCV). The initial charge capacity of the first anode active material layer 22 may be determined at about 0.01 V vs. $Li/Li^+$ from a 2nd OCV.

The maximum charging voltage may be determined according to types (kinds) of composite cathode active materials. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of $Li_2S$ or a $Li_2S$ composite may be about 2.5 V vs. Li/Li+. For example, the maximum charging voltage of $Li_2S$ or the $Li_2S$ composite may be about 3.0 V vs. Li/Li+. The ratio B/A of the initial charge capacity B of the first anode active material layer 22 to the initial charge capacity A of the cathode active material layer 12 may be, for example, in a range of about 0.01 to about 0.3, about 0.01 to about 0.2, or about 0.05 to about 0.1. The initial charge capacity (mAh) of the cathode active material layer 12 may be obtained by multiplying a charge specific capacity (mAh/g) of the composite cathode active material by a mass (g) of the composite cathode active material in the cathode active material layer 12. If (e.g., when) one or more suitable types (kinds) of composite cathode active materials are utilized, a value of specific charge capacity×mass may be calculated for each composite cathode active material, and the sum of the values may be the initial charge capacity of the cathode active material layer 12. The initial charge capacity of the first anode active material layer 22 may be also calculated in substantially the same manner. The initial charge capacity of the first anode active material layer 22 may be obtained by multiplying a charge specific capacity (mAh/g) of the anode active material by a mass of the anode active material in the first anode active material layer 22. If (e.g., when) one or more suitable types (kinds) of anode active materials are utilized, a value of specific charge capacity×mass may be calculated for each anode active material, and the sum of the values may be the initial charge capacity of the first anode active material layer 22. The specific charge capacity of each of the composite cathode active material and the anode active material may be measured by utilizing a solid half-cell that uses a lithium metal as a counter electrode. The initial charge capacity of each of the cathode active material layer 12 and the first anode active material layer 22 may be directly measured at a constant current density, for example, about 0.1 $mA/cm^2$ by utilizing an all-solid half-cell. The measurement may be performed on a cathode at an operating voltage from a 1st OCV up to a maximum charging voltage of, for example, about 3.0 V (vs. $Li/Li^+$). The measurement may be performed on an anode at an operating voltage from a 2nd OCV up to about 0.01 V for the anode, for example, a lithium metal. For example, an all-solid half-cell including the cathode active material layer 12 may be charged at a constant current of about 0.1 $mA/cm^2$ from a 1st OCV up to about 3.0 V, and an all-solid half-cell including the first anode active material layer 22 may be charged at a constant current of about 0.1 $mA/cm^2$ from a 2nd OCV up to about 0.01 V. A current density during constant current charging may be, for example, about 0.2 $mA/cm^2$ or about 0.5 $mA/cm^2$. The all-solid half-cell including the cathode active material layer 12 may be charged, for example, from a 1st OCV up to about 2.5 V, about 2.0 V, about 3.5 V, or about 4.0 V. A maximum charging voltage of a cathode active material layer may be determined by a maximum voltage of a battery that satisfies the safety conditions according to JIS C 8712:2015 of the Japanese Standards Association, the entire content of which is herein incorporated by reference.

If (e.g., when) the initial charge capacity of the first anode active material layer 22 is excessively low (e.g., lower than the above ranges), the first anode active material layer 22 may become very thin, and thus, during a repeated charging/discharging process, lithium dendrites formed between the first anode active material layer 22 and the anode current collector 21 may collapse the first anode active material layer 22, which may make it difficult to improve the cycle characteristics of the lithium battery 1. If (e.g., when) the charge capacity of the first anode active material layer 22 excessively increases (e.g., higher than the above ranges), the energy density of the lithium battery 1 may decrease, and the internal resistance of the lithium battery 1 due to the first anode active material layer 22 may increase, which may make it difficult to improve the cycle characteristics of the lithium battery 1.

A thickness of the first anode active material layer 22 may be, for example, about 50 % or less, about 40 % or less, about 30 % or less, about 20 % or less, about 10 % or less, or about 5 % or less of a thickness of the cathode active material layer 12. The thickness of the first anode active material layer 22 may be, for example, in a range of about 1 % to about 50 %, about 1 % to about 40 %, about 1 % to about 30 %, about 1 % to about 20 %, about 1 % to about 10 %, or about 1 % to about 5 % of the thickness of the cathode active material layer 12. The thickness of the first anode active material layer 22 may be, for example, in a range of about 1 μm to about 20 μm, about 2 μm to about 15 μm, or about 3 μm to about 10 μm. If (e.g., when) the first anode active material layer 22 is excessively thin (e.g., thinner than the above ranges), lithium dendrites formed between the first anode active material layer 22 and the anode current collector 21 may collapse the first anode active material layer 22, which may make it difficult to improve the cycle characteristics of the lithium battery 1. If (e.g.,

when) the thickness of the first anode active material layer 22 excessively increases (e.g., higher than the above ranges), the energy density of the lithium battery 1 may decrease, and the internal resistance of the lithium battery 1 due to the first anode active material layer 22 may increase, which may make it difficult to improve the cycle characteristics of the lithium battery 1. If (e.g., when) the thickness of the first anode active material layer 22 decreases, for example, the initial charge capacity of the first anode active material layer 22 may also decrease.

**Anode: Second anode active material layer**

Referring to FIG. 3, the lithium battery 1 may further include a second anode active material layer 24 which, after charging, is disposed between the anode current collector 21 and the first anode active material layer 22. The second anode active material layer 24 may be a metal layer including lithium or a lithium alloy. The metal layer may include lithium or the lithium alloy. In some embodiments, the second anode active material layer 24 may be the metal layer including lithium and thus may serve, for example, as a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but one or more embodiments are not limited to. Any material may be utilized as long as the material may be utilized as a lithium alloy in the art. The second anode active material layer 24 may include (e.g., consist of) one of such alloys or lithium or may include (e.g., consist of) one or more suitable types (kinds) of alloys. The second anode active material layer 24 may be, for example, a plated layer. For example, the second anode active material layer 24 may be precipitated between the first anode active material layer 22 and the anode current collector 21 during a charging process of the lithium battery 1.

A thickness of the second anode active material layer 24 is not limited, but may be, for example, in a range of about 1 μm to about 500 μm, about 1 μm to about 200 μm, about 1 μm to about 150 μm, about 1 μm to about 100 μm, or about 1 μm to about 50 μm. If (e.g., when) the second anode active material layer 24 is excessively thin (e.g., thinner than the above ranges), it is difficult for the second anode active material layer 24 to function as a lithium reservoir. If (e.g., when) the second anode active material layer 24 is excessively thick (e.g., thicker than the above ranges), the mass and volume of the lithium battery 1 may be increased, and the cycle characteristics of the lithium battery 1 may be actually deteriorated.

In other embodiments, in the lithium battery 1, for example, before assembly of the lithium battery 1, the second anode active material layer 24 may be disposed between the anode current collector 21 and the first anode active material layer 22. If (e.g., when) the second anode active material layer 24 is disposed between the anode current collector 21 and the first anode active material layer 22 before the assembly of the lithium battery 1, the second anode active material layer 24 may be the metal layer including lithium and thus may serve as a lithium reservoir. For example, before the assembly of the lithium battery 1, lithium foil may be disposed between the anode current collector 21 and the first anode active material layer 22.

If (e.g., when) the second anode active material layer 24 is precipitated by the lithium battery 1 being charged after being assembled, the lithium battery 1 may not include (e.g., may exclude) the second anode active material layer 24 if (e.g., when) the lithium battery 1 is assembled, and thus the energy density of the lithium battery 1 may increase. During charging of the lithium battery 1, the first anode active material layer 22 may be charged beyond a charge capacity thereof. For example, the first anode active material layer 22 may be overcharged. At the beginning of charging, lithium may be adsorbed in the first anode active material layer 22. The anode active material included in the first anode active material layer 22 may form an alloy or compound together with lithium ions that move from the cathode 10. If (e.g., when) charging is performed beyond a capacity of the first anode active material layer 22, for example, lithium may be precipitated on a rear side of the first anode active material layer 22, for example, between the anode current collector 21 and the first anode active material layer 22, and a metal layer corresponding to the second anode active material layer 24 may be formed by the precipitated lithium. The second anode active material layer 24 may be a metal layer mainly consisting of lithium (for example, metallic lithium). Such a result is obtained, for example, because the anode active material included in the first anode active material layer 22 includes a material that forms an alloy or compound together with lithium. During discharging, lithium in the first anode active material layer 22 and the second anode active material layer 24, for example, lithium in the metal layer, may be ionized to move toward the cathode 10. In some embodiments, in the lithium battery 1, lithium may be utilized as an anode active material. In some embodiments, the first anode active material layer 22 may cover the second anode active material layer 24, thereby serving as a protective layer for the second anode active material layer 24, for example, the metal layer, and concurrently (e.g., simultaneously) serving to suppress or reduce the precipitation growth of lithium dendrites. In some embodiments, a short circuit and a reduction in capacity of the lithium battery 1 may be suppressed or reduced, thereby improving the cycle characteristics of the lithium battery 1. In other embodiments, if (e.g., when) the second anode active material layer 24 is disposed if (e.g., when) the lithium battery 1 is charged after being assembled, the anode 20, for example, the anode current collector 21, the first anode active material layer 22, and a region therebetween, may be Li-free regions that do not include lithium (Li) in an initial state of the lithium battery 1 or in a state after full discharging thereof.

**Anode: Anode current collector**

The anode current collector 21 may include (e.g., consist of) a material that does not react with lithium, for example, a material that does not form both (e.g., simultaneously) an alloy and a compound together with lithium. Examples of a material constituting the anode current collector 21 may include copper (Cu), stainless steel, titanium (Ti), iron (Fe), cobalt (Co), and nickel (Ni), but one or more embodiments are not necessarily limited thereto. Any material may be utilized as long as the material may be utilized as an electrode current collector in the art. The anode current collector 21 may include (e.g., consist of) one type or kind of the above-described metals, an alloy of two or more types (kinds) of metals, or a coating material. The anode current collector 21 may be, for example, in the form of a plate or foil.

Referring to FIG. 2, the lithium battery 1 may further include a thin film 23, which includes an element capable of providing an alloy together with lithium, on one side of the anode current collector 21. The thin film 23 may be disposed between the anode current collector 21 and the first anode active material layer 22. The thin film 23 may include, for example, an element capable of providing an alloy together with lithium. Examples of the element capable of providing an alloy together with lithium may include gold, silver, zinc, tin, indium, silicon, aluminum, bismuth, and/or the like, but one or more embodiments are not necessarily limited thereto. Any material may be utilized as long as the material may form an alloy together with lithium in the art. The thin film 23 may include (e.g., consist of) one of such metals or an alloy of one or more suitable types (kinds) of metals. The thin film 23 may be disposed on one side of the anode current collector 21 so that, for example, a precipitated form of the second anode active material layer 24 precipitated between the thin film 23 and the first anode active material layer 22 may be further planarized, and the cycle characteristics of the lithium battery 1 may be further improved.

A thickness of the thin film 23 may be, for example, in a range of about 1 nm to about 800 nm, about 10 nm to about 700 nm, about 50 nm to about 600 nm, or about 100 nm to about 500 nm. If (e.g., when) the thickness of the thin film 23 is less than about 1 nm, it may be difficult for the thin film 23 to function. If (e.g., when) the film 23 is excessively thick (e.g., thinker than the above ranges), the thin film 23 itself may adsorb lithium, and thus an amount of lithium precipitated at the anode 20 may decrease, resulting in a decrease in energy density of the lithium battery 1 and a decrease in cycle characteristics of the lithium battery 1. The thin film 23 may be disposed on the anode current collector 21 through, for example, vacuum deposition, sputtering, plating, and/or the like, but one or more embodiments are not necessarily limited to such a method. Any method capable of providing the thin film 23 in the art may be utilized.

In some embodiments, the anode current collector 21 may include, for example, a base film and a metal layer disposed on one side or two sides of the base film. The base film may include, for example, a polymer. The polymer may be, for example, a thermoplastic polymer. The polymer may include, for example, PET, PE, PP, PBT, PI, or a combination thereof. The polymer may be an insulating polymer. The base film may include an insulating thermoplastic polymer, and thus, if (e.g., when) a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. The base film, metal layer, metal chip, and lead tab of the anode current collector 21 may be defined as for the above-described cathode current collector 11. The anode current collector 21 may have such a structure, and thus a weight of the anode 20 may be reduced, thereby improving the energy density of the anode 20 and the lithium battery 1.

Electrolyte layer

Electrolyte layer: Electrolyte

Referring to FIGS. 1 to 5, the electrolyte layer 30 may include an electrolyte disposed between the cathode 10 and the anode 20. The electrolyte may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may include, for example, at least one selected from among $Li_2S-P_2S_5$, $Li_2S-P_2S_5-LiX$, wherein X is a halogen element, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$, wherein m and n are each a positive number and Z is one of Ge, Zn, and Ga, $Li_2S-GeS_2$, $Li_2S-SiS_2-Li_3PO_4$, $Li_2S-SiS_2-Li_pMO_q$, wherein p and q are each a positive number and M is one of P, Si, Ge, B, Al, Ga, and In, $Li_{7-x}PS_{6-x}Cl_x$, wherein $0 \leq x \leq 2$, $Li_{7-x}PS_{6-x}Br_x$, wherein $0 \leq x \leq 2$, and $Li_{7-x}PS_{6-x}I_x$, wherein $0 \leq x \leq 2$. For example, the sulfide-based solid electrolyte may be prepared by treating a starting material such as $Li_2S$ or $P_2S_5$ through melt quenching or mechanical milling. For example, after such treating, heat treatment may be performed. The solid electrolyte may be in an amorphous state, a crystalline state, or a mixture state thereof. In some embodiments, the solid electrolyte may be, for example, a material that includes at least sulfur (S), phosphorus (P), and lithium (Li) as constituent elements

among the above-described materials of the sulfide-based solid electrolyte. For example, the solid electrolyte may be a material including $Li_2S-P_2S_5$. If (e.g., when) a material including $Li_2S-P_2S_5$ is utilized as a sulfide-based solid electrolyte material for providing a solid electrolyte, a mixing molar ratio of $Li_2S$ to $P_2S_5$, for example, $Li_2S:P_2S_5$, may be in a range of about 20:80 to about 90:10, about 25:75 to about 90:10, about 30:70 to about 70:30, or about 40:60 to 60:40.

The sulfide-based solid electrolyte may include, for example, an argyrodite-type or kind (e.g., argyrodite) solid electrolyte represented by Formula 1:

Formula 1 $$Li^{+}_{12-n-x}A^{n+}X^{2-}_{6-x}Y^{-}_{x}$$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, $1 \leq n \leq 5$, and $0 \leq x \leq 2$. The sulfide-based solid electrolyte may be, for example, an argyrodite-type or kind compound including at least one selected from among $Li_{7-x}PS_{6-x}Cl_x$, wherein $0 \leq x \leq 2$, $Li_{7-x}PS_{6-x}Br_x$, wherein $0 \leq x \leq 2$, and $Li_{7-x}PS_{6-x}I_x$, wherein $0 \leq x \leq 2$. The sulfide-based solid electrolyte may be, for example, an argyrodite-type or kind (e.g., argyrodite) compound including at least one selected from among $Li_6PS_5Cl$, $Li_6PS_5Br$, and $Li_6PS_5I$.

The argyrodite-type or kind (e.g., argyrodite) solid electrolyte may have a density of about 1.5 g/cc to about 2.0 g/cc. The argyrodite-type or kind (e.g., argyrodite) solid electrolyte may have a density of about 1.5 g/cc or more so that the internal resistance of a lithium battery may be reduced, and Li may be effectively suppressed or reduced from penetrating an electrolyte layer.

The oxide-based solid electrolyte may include, for example, $Li_{1+x+y}Al_xTi_{2-x}Si_yP_{3-y}O_{12}$, wherein $0<x<2$ and $0 \leq y<3$, $BaTiO_3$, $Pb(Zr,Ti)O_3$(PZT), $Pb_{1-x}La_xZr_{1-y}Ti_yO_3$ (PLZT), wherein $0 \leq x<1$ and $0 \leq y<1$, $PB(Mg_3Nb_{2/3})O_3-PbTiO_3$ (PMN-PT), $HfO_2$, SrTiOs, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$, wherein $0<x<2$ and $0<y<3$, $Li_xAl_yTi_z(PO_4)_3$, wherein $0<x<2$, $0<y<1$, and $0<z<3$, $Li_{1+x+y}(Al, Ga)_x(Ti, Ge)_{2-x}Si_yP_{3-y}O_{12}$, wherein $0 \leq x \leq 1$ and $0 \leq y \leq 1$, $Li_xLa_yTiO_3$, wherein $0<x<2$ and $0<y<3$, $Li_2O$, LiOH, $Li_2CO_3$, $LiAlO_2$, $Li_2O-Al_2O_3-SiO_2-P_2O_5-TiO_2-GeO_2$, $Li_{3+x}La_3M_2O_{12}$, wherein M=Te, Nb, or Zr and $0 \leq x \leq 10$, or a combination thereof. The oxide-based solid electrolyte may be prepared, for example, through sintering and/or the like.

The oxide-based solid electrolyte may be, for example, a garnet-type or kind (e.g., garnet) solid electrode selected from among $Li_7La_3Zr_2O_{12}$ (LLZO) and $Li_{3+x}La_3Zr_{2-a}M_aO_{12}$ (LLZO doped with M), wherein M=Ga, W, Nb, Ta, or Al, $0<a<2$, and $0 \leq x \leq 10$.

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of about 25 °C and a pressure of about 1 atm. The polymer solid electrolyte may not include (e.g., may exclude), for example, a liquid. The polymer solid electrolyte may include a polymer, and the polymer may include, for example, polyethylene oxide (PEO), PVDF, vinylidene fluoride-hexafluoropropylene (PVDF-HFP), a poly(styrene-b-ethylene oxide) (PS-PEO) block or reduce copolymer, poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), PAN, polytetrafluoroelene (PTFE), polyethylenedioxythiophene (PEDOT), polypyrrole (PPY), polyaniline, poly acetylene, NAFION™ AQUIVION®, FLEMION®, GORE™, ACIPLEX™, MORGANE®-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate ($DPASLi^+$), or a combination thereof, but one or more embodiments are not limited thereto. Any material may be utilized as long as the material may be utilized in a polymer electrolyte in the art. For the lithium salt, any material may be utilized as long as the material may be utilized as a lithium salt in the art. The lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$, wherein x and y are each a natural number from 1 to 20, LiCl, LiI, or a mixture thereof. A polymer included in the polymer solid electrolyte may be, for example, a compound including 10 or more, 20 or more, 50 or more, or 100 or more repeating units. A weight average molecular weight of the polymer included in the polymer solid electrolyte may be, for example, about 1,000 Dalton or more, about 10,000 Dalton or more, about 100,000 Dalton or more, or about 1,000,000 Dalton or more.

The gel electrolyte may be, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C and a pressure of about 1 atm. The polymer gel electrolyte may have, for example, a gel state without including a liquid. The liquid electrolyte utilized in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt and an ionic liquid. The polymer utilized in the polymer gel electrolyte may be selected from polymers utilized in a solid polymer

electrolyte. The organic solvent may be selected from organic solvents utilized in a liquid electrolyte. The lithium salt may be selected from among lithium salts utilized in a polymer solid electrolyte. The ionic liquid may refer to a salt in a liquid state at room temperature or a room-temperature molten salt that has a melting point at room temperature or less and includes (e.g., consists of) only ions. The ionic liquid may include, for example, at least one selected from among compounds including a) one cation selected from among an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazole-based cation, and a mixture thereof, and b) at least one anion selected from among $BF_{4-}$, $PF_{6-}$, $AsF_{6-}$, $SbF_{6-}$, $AlCl_4$-, $HSO_4$-, $ClO_4$-, $CH_3SO_3$-, $CF_3CO_2$-, Cl-, Br-, I-, $BF_4$-, $SO_4$-, $CF_3SO_3$-, $(FSO_2)_2N$-, $(C_2F_5SO_2)_2N$-, $(C_2F_5SO_2)(CF_3SO_2)N$-, and $(CF_3SO_2)_2N$-. The polymer solid electrolyte may be impregnated, for example, in a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, about 500 Dalton or more, about 1,000 Dalton or more, about 10,000 Dalton or more, about 100,000 Dalton or more, or about 1,000,000 Dalton or more.

**Electrolyte layer: Binder**

The electrolyte layer 30 may include, for example, a binder. The binder included in the electrolyte layer 30 may include, for example, SBR, polytetrafluoroethylene, PVDF, PE, and/or the like, but one or more embodiments are not limited thereto. Any material may be utilized as long as the material may be utilized as a binder in the art. The binder of the electrolyte layer 30 may be the same as or different from the binder included in the cathode active material layer 12 and the first anode active material layer 22. In some embodiments, the binder may not be provided.

A content (e.g., amount) of the binder included in the electrolyte layer 30 may be in a range of about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt% with respect to the total weight of the electrolyte layer 30.

**Electrolyte layer: Metal-organic framework**

According to some embodiments, the electrolyte layer 30 may include a metal-organic framework.

A content (e.g., amount) of the metal-organic framework in the electrolyte layer 30 may be in a range of about 0.1 parts by weight to about 50 parts by weight, for example, about 0.1 parts by weight to about 20 parts by weight, for example, about 1 parts by weight to about 10 parts by weight, or for example, about 1 part by weight to about 5 parts by weight with respect to about 100 parts by weight of the electrolyte layer 30. If (e.g., when) the content (e.g., amount) of the metal-organic framework in the electrolyte layer 30 is in such a range, hydrogen sulfide generated in a lithium battery may be well captured inside the metal-organic framework, thereby preventing or reducing problems caused by hydrogen sulfide generation in advance.

**Method of preparing metal-organic framework**

By utilizing a metal-organic framework composition including a metal ion precursor, an organic ligand precursor, and a solvent, a metal-organic framework may be prepared through hydrothermal synthesis, synthesis utilizing microwaves or ultrasound waves, or electrochemical synthesis. In the metal-organic framework composition, the organic ligand precursor and the metal ion precursor may be utilized in stoichiometric amounts.

The metal ion precursor may include titanium isopropoxide, titanium ethoxide, titanium butoxide, and aluminum nitrate, and/or the like, and the organic ligand precursor may include 1,4-benzenedicarboxylic acid, 1,3,5-benzenetricarboxylic acid, biphenyldicarboxylic acid, triphenyldicarboxylic acid, and/or the like. The solvent may include ethanol, N,N-dimethylformamide, tetrahydrofuran, methyl ethyl ketone, acetonitrile, methylene chloride, or a mixture thereof. A content (e.g., amount) of the solvent may be in a range of about 100 parts by weight to about 3,000 parts by weight with respect to about 100 parts by weight of the metal-organic framework.

In order to obtain a metal-organic framework having a substantially uniform size represented by Formula 1, during preparation of the metal-organic framework composition, the stoichiometric amount of the organic ligand precursor may be greater than a content (e.g., amount) of the metal ion precursor. For example, the content (e.g., amount) of the organic ligand precursor may be in a range of about 1.3 mole to about 100 mole, for example, about 1.5 mole to about 50 mole, or for example, about 1.3 mole to about 20 mole with respect to about 1 mole of the metal ion precursor. If (e.g., when) the organic ligand precursor is utilized in such a range, the metal-organic framework may be uniformly dispersed in an ion-conducting polymer matrix for providing a polymer electrolyte, and thus a polymer electrolyte with excellent or suitable ionic conductivity may be obtained without deterioration in the mechanical properties of the polymer electrolyte.

According to some embodiments, the above-described metal-organic framework may be obtained by heat-treating the above-described metal-organic framework composition at a temperature of about 50 °C to about 500 °C and performing a work-up process. In some embodiments, heat treatment conditions are not limited to such conditions.

If (e.g., when) necessary, the reaction product obtained through such a process may be additionally heat-treated at a temperature of about 100 °C to about 1,200 °C.

The metal-organic framework is not limited to a specific form and may also be provided, for example, in the form of powder, thin film, membrane, pellet, slurry, paste, paint, bead, honeycomb, mesh, fiber, corrugated sheet, rotor, and/or the like.

In a cathode active material layer according to some embodiments, the cathode active material layer being supported on a metal-organic framework may be confirmed through X-ray analysis, thermogravimetric analysis, and/or the like of the cathode active material layer. The metal-organic framework may have a metal oxide form in which pores are regularly arranged, as an X-ray diffraction analysis result, a main peak may appear at a low angle of about 10 degrees or less, for example, about 5 degrees or less, or for example, about 3 degrees or less. The main peak may refer to a diffraction characteristic due to a structure in which pores are regularly arranged. The presence and content (e.g., amount) of the metal-organic framework in the cathode active material layer may be confirmed through thermogravimetric analysis. A cross section of a sample may be obtained through a focused ion beam (FIB), and the presence of the metal-organic framework having a nanosize may be confirmed through elemental analysis.

The present disclosure will be described in more detail through the following Examples and Comparative Examples. However, Examples are for illustrative purposes only, and the scope of the present disclosure is not limited by

**Examples.**

**Preparation Example 1: Preparation of metal-organic framework ($Ti_8O_8(OH)_4\{O_2C\text{-}C_6H_4\text{-}CO_2\}_6$) (Ti-MOF)**

Titanium isopropoxide and 1,4-benzene dicarboxylic acid were mixed in a mixed solvent of methanol and N,N-dimethylformamide having a volume ratio of about 9:1 to obtain a mixture. In the mixture, contents of the titanium isopropoxide and the 1,4-benzene dicarboxylic acid were stoichiometrically controlled or selected to obtain an object $Ti_8O_8(OH)_4\{O_2C\text{-}C_6H_4\text{-}CO_2\}_6$. The total content (e.g., amount) of the mixed solvent was adjusted to about 150 times a weight of the titanium isopropoxide.

The mixture was heat-treated at a temperature of about 150 °C for about 24 hours.

After a reaction was completed, an obtained reaction product was cooled to room temperature (about 20 °C to about 25 °C). Then, the cooled result was cleaned utilizing each of methanol and N, N-dimethylformamide. The result subjected to such a cleaning process was dried at a temperature of about 120 °C for 24 hours to prepare $Ti_8O_8(OH)_4\{O_2C\text{-}C_6H_4\text{-}CO_2\}_6)$ (hereinafter referred to as Ti-MOF).

**Evaluation Example 1: Dynamic laser scattering analysis**

A diameter distribution of Ti-MOF primary particles prepared according to Preparation Example 1 was observed by utilizing dynamic laser scattering (DLS). Results thereof are shown in Table 1 . A DLS device utilized during the above observation was LA-950 manufactured by HORIBA, Ltd.

Table 1

| Classification | Average particle diameter $\mu$ ($\mu$m) | Standard deviation ($\sigma$) | P($\sigma$2/$\mu$) |
|---|---|---|---|
| Preparation Example 1 | 0.12634 | 0.0344 | 0.12204 |

In Table 1, F($\sigma$2/$\mu$) is a factor representing a diameter distribution of primary particles of a metal-organic framework. $\sigma$2 denotes a variance of the primary particles of the metal-organic framework. The variance corresponds to a value equivalent to a square value of a standard deviation of an average particle diameter of the primary particles of the metal-organic framework, and $\mu$ denotes an average particle diameter of the primary particles of the metal-organic framework.

Referring to Table 1, the factor F representing the diameter distribution of the primary particles of the metal-organic framework according to Preparation Example 1 is a value less than about 1.0.

For example, through SEM and dynamic laser scattering analysis results, it was confirmed that a Ti-based nano-metal-organic framework with an average size of about 120 nm and a substantially uniform shape was synthesized.

**Evaluation Example 2: Analysis of pore characteristics (nitrogen adsorption/desorption curve)**

The metal-organic framework according to Preparation Example 1 was degassed under vacuum at a temperature of about 150 °C for about 24 hours, and then a nitrogen adsorption experiment was performed. In the nitrogen adsorption experiment, nitrogen was adsorbed and desorbed to and from a powder of the metal-organic framework, a specific surface area and a pore volume of the metal-organic framework were calculated through a difference between an amount of adsorbed nitrogen and an amount of desorbed nitrogen, and a pore size distribution was obtained to calculate an average pore size therefrom. A nitrogen adsorption device utilized during the observation was BELSORP-max manufactured by from BEL Co., Ltd.

For example, by utilizing a Brunauer-Emmett-Teller (BET) method, a specific surface area of pores was calculated in a relative nitrogen pressure (P/P0) range of 0 to 1.0 from a nitrogen adsorption-desorption isotherm obtained from the nitrogen adsorption experiment. Results thereof are shown in Table 2.

Table 2

| Classification | Specific surface area ($m^2$/g) | Pore volume ($cm^3$/g) | Pore size (Å) |
|---|---|---|---|
| Preparation Example 1 | 1,120 | 0.9924 | 3.5598 |

Referring to Table 2, it can be confirmed that the metal-organic framework according to Preparation Example 1 has a mesoporous structure with a specific surface area of about 1,000 $m^2$/g or more.

**Manufacturing of cathode and secondary battery**

**Example 1**

**Preparation of cathode**

The Ti-MOF according to Preparation Example 1 was prepared as a metal-organic framework. A $Li_2S$-LiI-CNF composite was prepared as a cathode active material. $Li_6PS_5Cl$ (D50=about 3.0 μm, crystalline), which was an argyrodite-type or kind (e.g., argyrodite)_crystal, was prepared as a solid electrolyte. PTFE was prepared as a binder. Such materials were mixed at a weight ratio of about 5: 60:40:1.2 of metal-organic framework: composite cathode active material:solid electrolyte: binder to prepare a cathode mixture. The cathode mixture was obtained through dry mixing utilizing a thinky mixer.

The cathode mixture was disposed on one side of a cathode current collector consisting of aluminum foil, of which one side was coated with carbon, and was plate-pressed at a pressure of about 200 MPa for about 10 minutes to prepare a cathode. A thickness of the cathode was about 120 μm. A thickness of a cathode active material layer was about 100 μm, and a thickness of the carbon-coated aluminum foil was about 20 μm. An area of the cathode active material layer was equal to an area of the cathode current collector.

**Preparation of anode**

SUS foil having a thickness of about 10 μm was prepared as an anode current collector. As an anode active material, Carbon black (CB) particles with a primary particle diameter of about 30 nm and silver (Ag) particles with an average particle diameter of about 60 nm were prepared.

About 4 g of a mixed powder obtained by mixing the CB particles and the silver (Ag) particles at a weight ratio of about 3:1 was put into a container, and about 4 g of an N-methyl-2-pyrrolidone (NMP) solution including about 7 wt% of a PVDF binder (#9300 manufactured by Kureha Corporation) was added thereto to prepare a mixed solution. While NMP was added little by little to the prepared mixed solution, the mixed solution was stirred to prepare a slurry. The prepared slurry was applied onto a SUS sheet by utilizing a bar coater, dried in air at a temperature of about 80 °C for about 10 minutes, and then vacuum-dried at a temperature of about 40 °C for about 10 hours to prepare a stack. The prepared stack was cold-roll-pressed to planarize a surface thereof, thereby preparing an anode having a first anode active material layer/anode current collector structure. A thickness of the first anode active material layer was about 15 μm. An area of the first anode active material layer was equal to an area of the anode current collector.

**Preparation of solid electrolyte layer**

A mixture was prepared by adding about 1.5 parts by weight of an acrylic binder with respect to about 98.5 parts by

weight of a solid electrolyte to a $Li_6PS_5Cl$ solid electrolyte ($D_{50}$= about 3.0 μm, crystalline) which was an argyrodite-type or kind (e.g., argyrodite) crystal. Octyl acetate was added to the prepared mixture and stirred to prepare a slurry. The prepared slurry was applied onto an about 15 μm-thick non-woven fabric placed on an about 75 μm-thick PET substrate by utilizing a bar coater and dried in air at a temperature of about 80 °C for about 10 minutes to prepare a stack. The prepared stack was vacuum-dried at a temperature of about 80 °C for about 2 hours to prepare a solid electrolyte layer.

**Inactive member**

A slurry obtained by mixing pulp fiber (cellulose fiber), glass fiber, aluminum hydroxide ($Al(OH)_3$), an acrylic binder, and a solvent was molded into a gasket shape, and then the solvent was removed to prepare a flame-retardant inactive member.
A weight ratio of the pulp fiber (cellulose fiber), the glass fiber, the aluminum hydroxide ($Al(OH)_3$), and the acrylic binder was about 20:8:70:2. A thickness of the inactive member was about 120 μm.
Before the prepared flame-retardant inactive member was disposed on the solid electrolyte layer, vacuum heat treatment was performed at a temperature of about 80 °C for about 5 hours to remove moisture and/or the like from the flame-retardant inactive member.

**Manufacturing of lithium battery**

Referring to FIG. 1, the solid electrolyte layer was disposed on the anode such that the first anode active material layer was in contact with the solid electrolyte layer, and the cathode was disposed on the solid electrolyte layer. A gasket was disposed around the cathode to surround the cathode and be in contact with the solid electrolyte layer, thereby preparing a stack. A thickness of the gasket was about 120 μm. The above-described flame-retardant inactive member was utilized as the gasket. The gasket was disposed in contact with a side of the cathode and the solid electrolyte layer. The cathode was disposed at a central portion of the solid electrolyte layer, and the gasket was disposed to surround the cathode and extend to an end portion of the solid electrolyte layer. An area of the cathode was about 90 % of an area of the solid electrolyte layer, and the gasket was disposed in the remaining about 10 % of the entire area of the solid electrolyte layer in which the cathode was not disposed.
The prepared stack was plate-pressed at a temperature of about 85 °C and a pressure of about 500 MPa for about 30 minutes. Through such pressing, the solid electrolyte layer may be sintered to improve battery characteristics. A thickness of the sintered solid electrolyte layer was about 45 μm. A density of the $Li_6PS_5Cl$ solid electrolyte, which was an argyrodite-type or kind (e.g., argyrodite) crystal included in the sintered solid electrolyte layer, was about 1.6 g/cc. The area of the solid electrolyte layer was equal to an area of the anode.
The pressed stack was put into a pouch and vacuum-sealed to manufacture a lithium battery. Portions of the cathode current collector and the anode current collector were extended to the outside of the sealed battery and utilized as a cathode terminal and an anode terminal.

**Example 2**

A lithium battery was manufactured in substantially the same manner as in Example 1, except that, during preparation of a solid electrolyte, unlike Example 1, about 90 parts by weight of a $Li_6PS_5Cl$ solid electrolyte (D50= about 3.0 millimeter (mm), crystalline) which was an argyrodite type or kind (e.g., argyrodite) crystal, about 8.5 parts by weight of the Ti-MOF according to Preparation Example 1 as a metal-organic framework, and an acrylic binder were added to prepare a mixture, and then a solid electrolyte was prepared therefrom.

**Comparative Example 1**

A cathode and a lithium battery were manufactured in substantially the same manner as in Example 1, except that, during preparation of the cathode, unlike Example 1, a metal-organic framework was not added, and a composite cathode active material, a solid electrolyte, and a binder were mixed at a weight ratio of about 60:40:1.2 to prepare a cathode mixture.

**Comparative Example 2**

A lithium battery were manufactured in substantially the same manner as in Example 1, except that, during predation of a cathode, unlike Example 1, a metal-organic framework was not added, and a composite cathode active material, a solid electrolyte, and a binder were mixed at a weight ratio of about 60:40:1.2 to prepare a cathode mixture, and during preparation of a solid electrolyte, unlike Example 1, about 90 parts by weight of a $Li_6PS_5Cl$ solid electrolyte (D50=

about 3.0 mm, crystalline) as an argyrodite type or kind crystal, 8.5 parts by weight of the Ti-MOF according to Preparation Example 1 as a metal-organic framework, and an acrylic binder were added to prepare a mixture, and then a solid electrolyte was prepared therefrom.

**Evaluation Example 3: Analysis of amount of generated hydrogen sulfide**

While the lithium batteries according to Examples 1 and 2 and Comparative Examples 1 and 2 were charged and discharged, a maximum amount per hour of hydrogen sulfide generated from the lithium batteries and an accumulated amount of hydrogen sulfide generated for about 1 hour were measured. An analyzer utilized to measure the amount of the generated hydrogen sulfide and the accumulated amount of the hydrogen sulfide is a Breathview manufactured by AIOBIO Co., Ltd. Analysis results are shown in Table 3.

Table 3

| | Whether Ti-MOF is included | | Maximum amount per hour of generated hydrogen sulfide | Accumulated amount per 1 hour of generated hydrogen sulfide |
|---|---|---|---|---|
| | Cathode | Electrolyte | | |
| Example 1 | Inclusion | Non-inclusion | 3.4 ppm | 4.17 μL |
| Example 2 | Inclusion | Inclusion | 2.2 ppm | 3.6 μL |
| Comparative Example 1 | Non-inclusion | Non-inclusion | 7.8 ppm | 9.01 μL |
| Comparative Example 2 | Non-inclusion | Inclusion | 4.6 ppm | 4.92 μL |

As shown in Table 3, in each of the lithium batteries according to Examples 1 and 2, an amount of generated hydrogen sulfide was reduced as compared with the lithium batteries of Comparative Examples 1 and 2.

According to one or more embodiments, the cathode for a lithium battery may include a metal-organic framework to internally adsorb hydrogen sulfide that may occur if (e.g., when) lithium sulfide and sulfide-based solid electrolytes are exposed to the air, and thus, as compared with a case in which utilized alone, an amount of hydrogen sulfide exposed to the outside may be reduced, and a decrease in ionic conductivity over time may be prevented or reduced.

In present disclosure, "not include a or any 'component'", "exclude a or any 'component'", "'component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the one or more suitable components of the device may be formed on one integrated circuit (IC) chip or on separate IC chips. Further, the one or more suitable components of the device may be implemented on a flexible printed circuit film, a tape carrier package (TCP), a printed circuit board (PCB), or formed on one substrate. Further, the one or more suitable components of the device may be a process or thread, running on one or more processors, in one or more computing devices, executing computer program instructions and interacting with other system components for performing the one or more suitable functionalities described herein. The computer program instructions are stored in a memory which may be implemented in a computing device utilizing a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

In the present disclosure, when particles are spherical, "diameter" indicates a particle diameter or an average particle diameter, and when the particles are non-spherical, the "diameter" indicates a major axis length or an average major axis length.

In present disclosure, "not include a or any 'component'" "exclude a or any 'component'", "'component'-free", and/or the like refers to that the "component" not being added, selected or utilized as a component in the composition/-structure, but the "component" of less than a suitable amount may still be included due to other impurities and/or external factors.

It should be understood that embodiments described herein should be considered in a descriptive sense only and not for purposes of limitation. Descriptions of features or aspects within each embodiment should typically be considered

as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

1. A cathode (10), the cathode (10) comprising:

   a cathode current collector (11); and
   a cathode active material layer (12) on the cathode current collector (11),
   wherein the cathode active material layer (12) comprises lithium sulfide ($Li_2S$) and a metal-organic framework, and
   wherein the cathode (10) is for a lithium battery.

2. The cathode (10) as claimed in claim 1, wherein a size of the metal-organic framework is in a range of 1 nm to 1 $\mu$m.

3. The cathode (10) as claimed in claim 1 or 2, wherein the metal-organic framework has a size having a substantially uniform diameter distribution represented by Inequation 1:

   Inequation 1

   $$0.0<\sigma 2/\mu<1.0$$

   wherein, in Inequation 1, $\sigma 2$ denotes a variance of a plurality of primary particles measured by using dynamic laser scattering (DLS), and $\mu$ denotes an average particle diameter of the plurality of primary particles.

4. The cathode (10) as claimed in any one of claims 1 to 3, wherein the metal-organic framework is a porous crystalline compound comprising: a metal ion of Group 2 to Group 15 of the periodic table or a metal ion cluster of Group 2 to Group 15 of the periodic table; and an organic ligand chemically bonded to the metal ion or the metal ion cluster, wherein preferably the metal ion of Group 2 to Group 15 comprises at least one selected from among cobalt (Co), nickel (Ni), molybdenum (Mo), tungsten (W), ruthenium (Ru), osmium (Os), cadmium (Cd), beryllium (Be), calcium (Ca), barium (Ba), strondium (Sr), iron (Fe), manganese (Mn), chromium (Cr), vanadium (V), aluminum (Al), titanium (Ti), zirconium (Zr) ), copper (Cu), zinc (Zn), magnesium (Mg), hafnium (Hf), niobium (Nb), tantalum (Ta), rhenium (Re), rhodium (Rh), iridium (Ir), palladium (Pd) ), platinum (Pt), silver (Ag), scandium (Sc), yttrium (Y), indium (In), thallium (Tl), silicon (Si), germanium (Ge), tin (Sn), lead (Pb), arsenic (As), antimony (Sb), and bismuth (Bi), and the organic ligand is a group derived from at least one selected from among aromatic dicarboxylic acid, aromatic tricarboxylic acid, an imidazole-based compound, a tetrazole-based compound, 1,2,3-triazole, 1,2,4-triazole, pyrazole, aromatic sulfonic acid, aromatic phosphoric acid, aromatic sulfinic acid, aromatic phosphinic acid, bipyridine, and a compound having at least one functional group selected from among an amino group, an imino group, an amide group, a methanedithioic acid group ($-CS_2H$), a methanedithioic acid anion group ($-CS_2-$), a pyridine group, and a pyrazine group.

5. The cathode (10) as claimed in any one of claims 1 to 4, wherein the metal-organic framework is represented by Formula 1:

   Formula 1 $M_mO_kX_lL_p$

   wherein, in Formula 1, M is at least one selected from among $Ti^{4+}$, $Zr^{4+}$, $Mn^{4+}$, $Si^{4+}$, $Al^{3+}$, $Cr^{3+}$, $V^{3+}$, $Ga^{3+}$, $Mn^{3+}$, $Zn^{+3}$, $Mn^{2+}$, $Mg^{2+}$, $Fe^{2+}$, $Fe^{3+}$, and $Cu^{+2}$, m is an integer from 1 to 10, k is 0 or an integer from 1 to 10, l is 0 or an integer from 1 to 10, p is an integer from 1 to 10, X is OH-, Cl-, F-, I-, Br-, $SO_4^{2-}$, $NO_3^-$, $ClO_4^-$, $PF_6^-$, $BF_3^-$, $-(COO)_n^-$, $R^1-(S0_3)_n^-$, or $R^1-(PO_3)_n^-$, $R^1$ is at least one selected from among hydrogen and a C1-C30 alkyl group, n is an integer from 1 to 4, L is a ligand comprising a radical R containing q carboxylate groups (*COO-#), q is an integer from 1 to 6, * denotes a position at which R is bonded to a carboxylate group, # denotes a position at which a metal ion M is bonded to a carboxylate group, and R is selected from among substituted or unsubstituted C1-C30 alkyl, substituted or unsubstituted C2-C30 alkenyl, substituted or unsubstituted C2-C30 alkynyl, substituted or unsubstituted mono C1-C30 aryl and polycyclic

C1-C30 aryl, substituted or unsubstituted mono C1-C30 heteroaryl, and polycyclic C1-C30 heteroaryl.

**6.** The cathode (10) as claimed in any one of claims 1 to 5, wherein the metal-organic framework comprises a compound represented by Formula 2:

Formula 2 $M'_mO_kX'_lL'_p$

wherein, in Formula 2, M' is at least one selected from among $Ti^{4+}$, $Zr^{4+}$, $V^{3+}$, $Zn^{+3}$, $Fe^{2+}$, $Fe^{3+}$, and $Cu^{+2}$, L' is at least one selected from among $C_6H_4(CO_2^-)_2$ (terephthalate), $C_2H_2(CO_2^-)_2$ (fumarate), $C_4H_4(CO_2^-)_2$ (muconate), $C_5H_3S(CO_2^-)_2$ (2,5-thiophenedicarboxylate), $C_6H_2N_2(CO_2)_2$ (2,5-pyrazine dicarboxylate), $C_2H_4(CO_2^-)_2$ (succinate), $C_3H_6(CO_2^-)_2$ (glutarate), $C_4H_8(CO_2^-)_2$ adipate, $C_{10}H_6(CO_2^-)_2$ (naphtalene-2,6-dicarboxylate), $C_{12}H_8(CO_2^-)_2$ (biphenyl-4,4'-dicarboxylate), $C_{12}H_8N_2(CO_2^-)_2$ (azobenzenedicarboxylate), $C_6H_3(CO_2^-)_3$ (benzene-1,2,4-tricarboxylate), $C_6H_3(CO_2^-)_3$ (benzene-1,3,5-tricarboxylate), $C_{24}H_{15}(CO_2^-)_3$ (benzene-1,3,5-tribenzoate), $C_6H_2(CO_2^-)_4$(benzene-1,2,4,5-tetracarboxylate, $C_{10}H_4(CO_2^-)_4$ (naphtalene-2,3,6,7-tetracarboxylate), $C_{10}H_4(CO_2^-)_4$ (naphtalene-1,4,5,8-tetracarboxylate), and $C_{12}H_6(CO_2^-)_4$ (biphenyl-3,5,3',5'-tetracarboxylate), X' is at least one selected from among OH-, $Cl^-$, $F^-$, $CH_3COO^-$, $PF_6^-$, and $ClO_4^-$, m is an integer from 1 to 8, k is 0 or an integer from 1 to 8, l is 0 or an integer from 1 to 8, and p is an integer from 1 to 8.

**7.** The cathode (10) as claimed in any one of claims 1 to 6, wherein the metal-organic framework comprises at least one selected from among $Ti_8O_8(OH)_4[O_2C\text{-}C_6H_4\text{-}CO_2]_6$, $Ti_8O_8(OH)_4[O_2C\text{-}C_6H_3(NH_2)\text{-}CO_2]_6$, $VO[C_6H_4(CO_2)_2]$, $Al(OH)[C_6H_4(CO_2)_2]$, $Cr(OH)[C_6H_4(CO_2)_2]$, $Al(OH)[C_{10}H_6(CO_2)_2]$, $Al_1O(OH)_{18}(H_2O)_3[C_6H_3\text{-}(CO_2)_3]_6.nH_2O$, $Cr_3OX_l[C_6H_4(CO_2)_2]_3$, wherein X is at least one selected from among H, OH-, $Cl^-$, $F^-$, $CH_3COO^-$, $PF_6^-$ and $ClO_4^-$ and l is 0 or an integer from 1 to 8), $Cr_3OX_l[C_{12}H_8(CO_2)_2]_3$, wherein X is at least one selected from among H, OH-, Cl-, $F^-$ $CH_3COO^-$, $PF_6^-$, and $ClO_4^-$ and l is 0 or an integer from 1 to 8, $Cr_3OX_l[C_6H_3(CO_2)_3]_3$, wherein X is at least one selected from among H, OH-, Cl-, $F^-CH_3COO^-$, $PF_6^-$, and $ClO_4^-$ and l is 0 or an integer from 1 to 8, $Al_8(OH)_{15}(H_2O)_3[C_6H_3(CO_2)_3]_3$, $V_3OX_l[C_6H_3(CO_2)_3]_3$, wherein X is at least selected from among H, OH-, Cl-, $F^-$, $CH_3COO^-$, $PF_6^-$ and $ClO_4^-$ and l is 0 or an integer from 1 to 8, $ZrO[C_6H_4(CO_2)_2]$, and $Ti_8O_8(OH)_4[O_2C\text{-}C_6H_3(NH_2)\text{-}CO_2]_6$.

**8.** The cathode (10) as claimed in any one of claims 1 to 7, wherein a pore size of the metal-organic framework is 5 nm or less.

**9.** The cathode (10) as claimed in any one of claims 1 to 8, wherein the cathode active material layer (12) further comprises an ion-conductive lithium salt, preferably wherein the ion-conductive lithium salt is a binary compound or a ternary compound,

wherein the binary compound comprises LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$, or a combination thereof, and
wherein the ternary compound comprises LisOCl, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof, and/or
wherein preferably the cathode active material layer (12) further comprises a carbon-based material,
wherein the carbon-based material comprises carbon nanostructures, and
wherein the carbon nanostructures comprise carbon nanofibers, carbon nanotubes, carbon nanobelts, carbon nanorods, or a combination thereof.

**10.** The cathode (10) as claimed in any one of claims 1 to 9, wherein the cathode active material layer (12) further comprises a solid electrolyte, wherein preferably the solid electrolyte is a sulfide-based solid electrolyte,

wherein the sulfide-based solid electrolyte comprises at least one selected from among $Li_2S\text{-}P_2S_5$, $Li_2S\text{-}P_2S_5\text{-}LiX$, X being a halogen element, $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$, m and n being each a positive number and Z is one of Ge, Zn, and Ga, $Li_2S\text{-}GeS_2$, $Li_2S\text{-}SiS_2\text{-}Li_3PO_4$, $Li_2S\text{-}SiS_2\text{-}Li_pMO_q$, p and q being each a positive number and M being one selected from amoung P, Si, Ge, B, Al, Ga, and In, $Li_{7-x}PS_{6-x}Cl_x$, where $0 \leq x \leq 2$, $Li_{7-x}PS_{6-x}Br_x$, where $0 \leq x \leq 2$, and $Li_{7-x}PS_{6-x}I_x$, where $0 \leq x \leq 2$, or
wherein preferably the solid electrolyte is a sulfide-based solid electrolyte comprises an argyrodite-type solid electrolyte,
wherein the argyrodite-type solid electrolyte comprises at least one selected from among $Li_6PS_5Cl$, $Li_6PS_5Br$, and LisPSsI, and
a density of the argyrodite-type solid electrolyte is in a range of 1.5 g/cc to 2.0 g/cc.

**11.** The cathode (10) as claimed in any one of claims 1 to 10, wherein the cathode current collector (11) comprises a base film and a metal layer on a side of the base film,

wherein the base film comprises a polymer, the polymer comprising polyethylene terephthalate (PET), polyethylene (PE), polypropylene (PP), polybutylene terephthalate (PBT), polyimide (PI), or a combination thereof, and
wherein the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

**12.** A lithium battery comprising:

the cathode (10) as claimed in any one of claims 1 to 11;
an anode; and
an electrolyte layer between the cathode (10) and the anode.

**13.** The lithium battery as claimed in claim 12, wherein the electrolyte layer comprises a solid electrolyte, a gel electrolyte, or a combination thereof.

**14.** The lithium battery as claimed in claim 12 or 13, wherein the electrolyte layer comprises a metal-organic framework.

**15.** The lithium battery as claimed in any one of claims 12 to 14, wherein the anode comprises a lithiophilic material.

FIG. 1

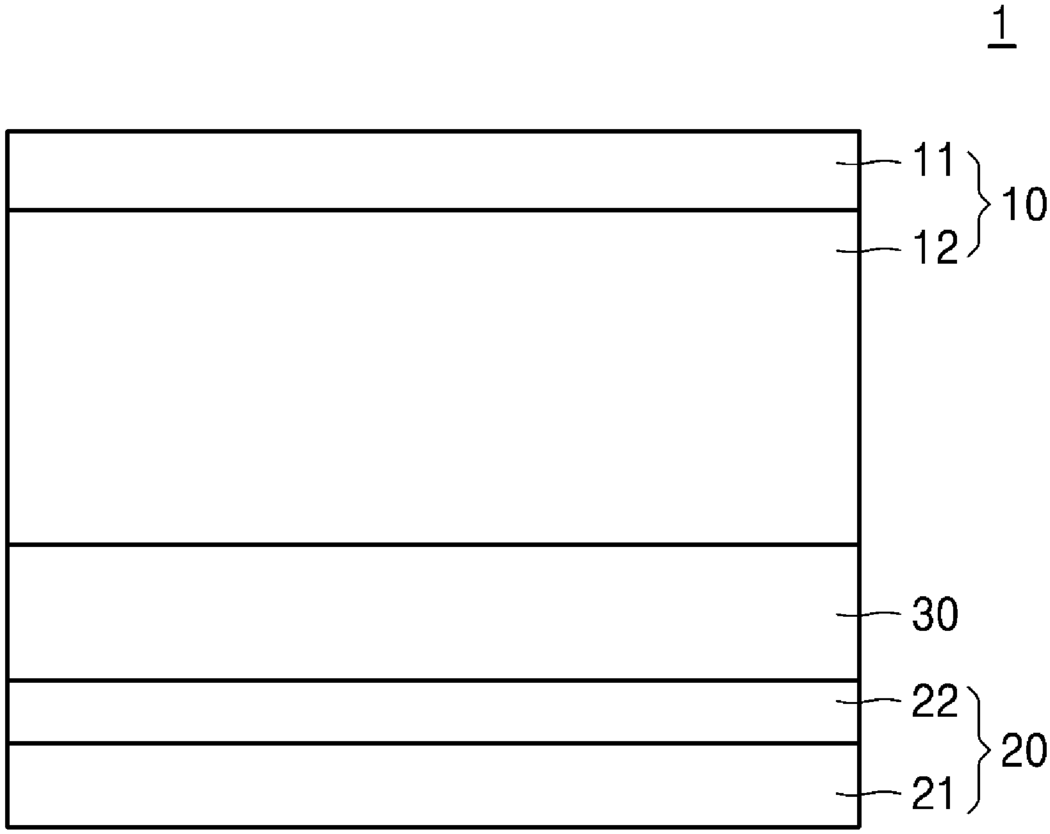

FIG. 2

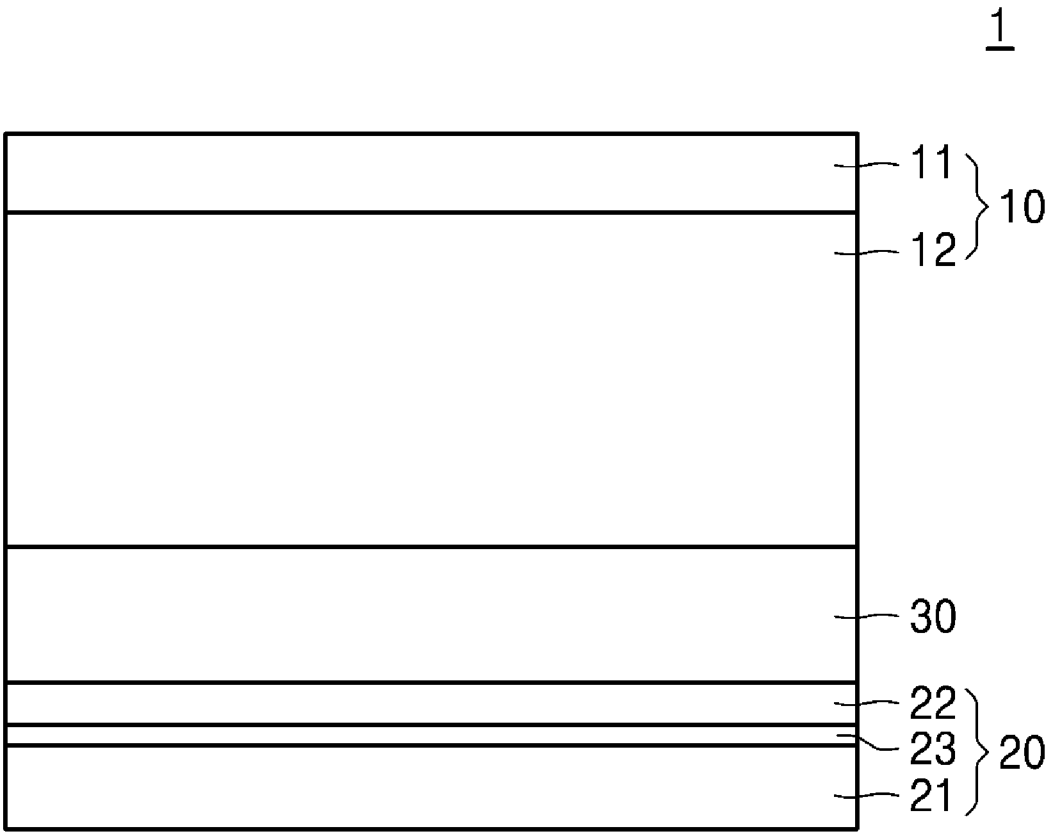

FIG. 3

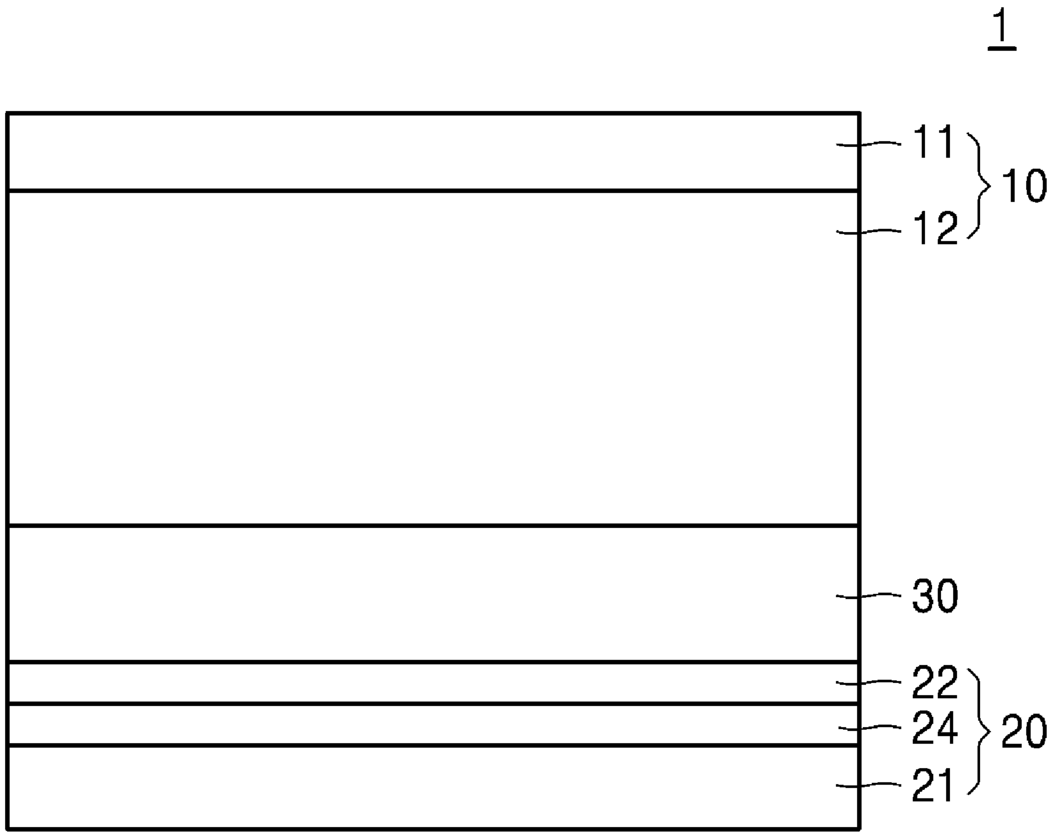

FIG. 4

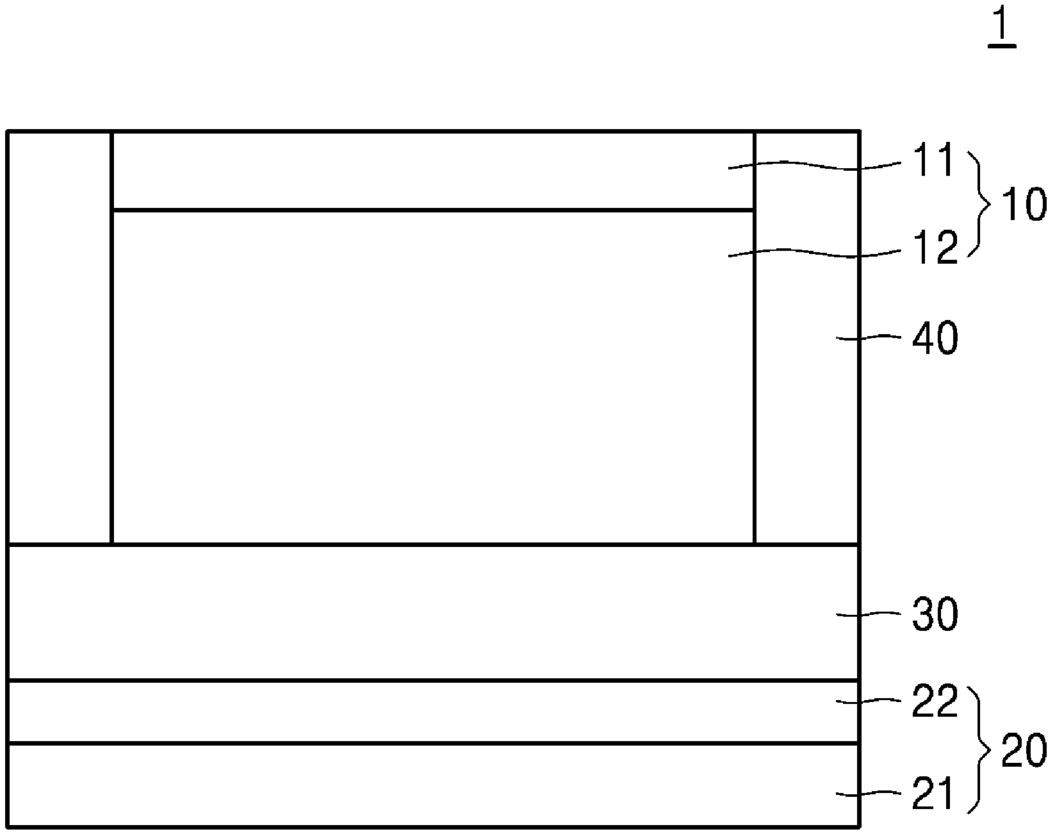

FIG. 5

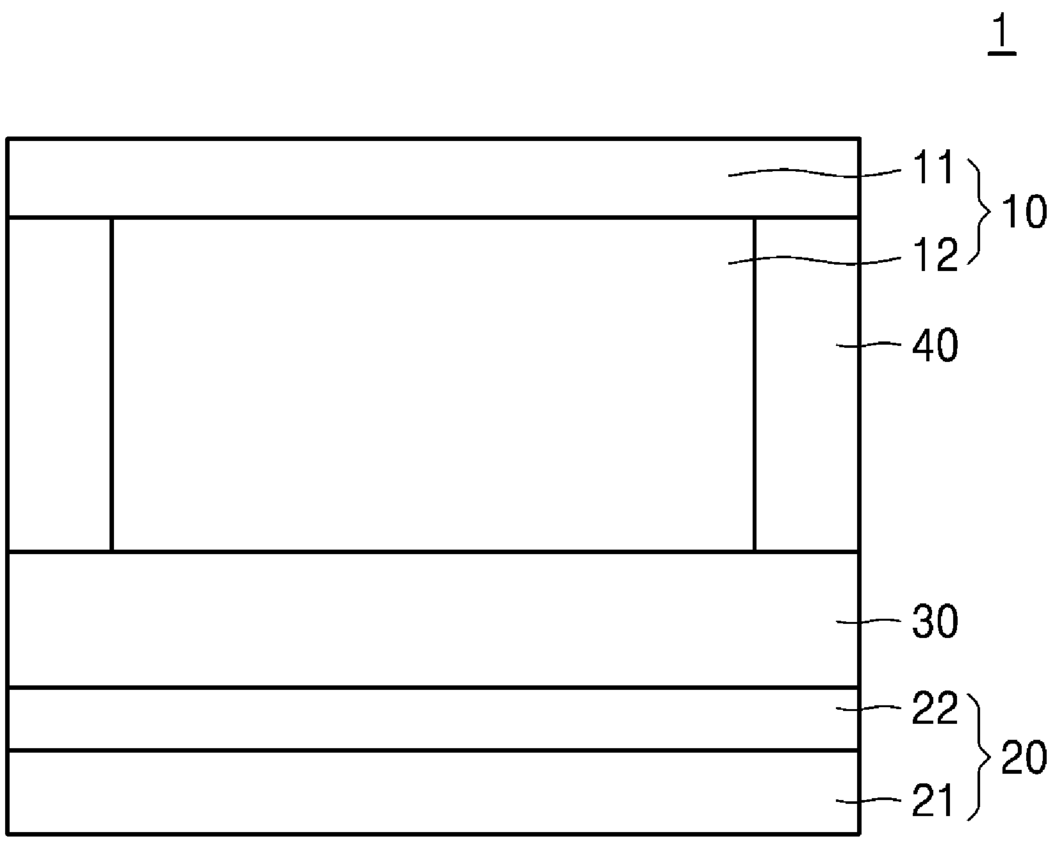

Europäisches Patentamt
European Patent Office
Office européen des brevets

# EUROPEAN SEARCH REPORT

Application Number
EP 24 21 2867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2023/271834 A1 (KIM ILTO [KR] ET AL) 31 August 2023 (2023-08-31)<br>* page 1, paragraph 0012 - page 10, paragraph 0181; figures 1-13; tables 1-3 *<br>----- | 1,4-9, 11,12,15<br>2-10,13, 14 | INV.<br>H01M4/58<br>H01M4/136<br>H01M10/0525<br>H01M10/0562<br><br>ADD.<br>H01M4/02 |
| X<br><br>Y | CN 102 780 001 B (UNIV CENTRAL SOUTH; SHENZHEN RES INST CENTRAL SOUTH UNIVERSITY) 17 September 2014 (2014-09-17)<br>* page 2, paragraph 0008 - page 6, paragraph 0056; figures 1-5; examples 1-6 *<br>----- | 1,4-9, 11,12,15<br><br>2-10,13, 14 | |
| Y | US 2020/052330 A1 (CHOI HONGSOO [KR] ET AL) 13 February 2020 (2020-02-13)<br>* page 2, paragraph 0030 - page 11, paragraph 0145; figures 1-9 *<br>----- | 2-10,13, 14 | |
| | | | TECHNICAL FIELDS SEARCHED (IPC) |
| | | | H01M |

1

The present search report has been drawn up for all claims

| Place of search | Date of completion of the search | Examiner |
|---|---|---|
| Munich | 3 April 2025 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 21 2867

This annex lists the patent family members relating to the patent documents cited in the above-mentioned European search report. The members are as contained in the European Patent Office EDP file on
The European Patent Office is in no way liable for these particulars which are merely given for the purpose of information.

03-04-2025

| Patent document cited in search report | Publication date | Patent family member(s) | Publication date |
|---|---|---|---|
| US 2023271834 A1 | 31-08-2023 | CN 116261563 A | 13-06-2023 |
| | | EP 4163254 A1 | 12-04-2023 |
| | | JP 7556134 B2 | 25-09-2024 |
| | | JP 2023541805 A | 04-10-2023 |
| | | US 2023271834 A1 | 31-08-2023 |
| | | WO 2022164213 A1 | 04-08-2022 |
| CN 102780001 B | 17-09-2014 | NONE | |
| US 2020052330 A1 | 13-02-2020 | KR 20200018132 A | 19-02-2020 |
| | | US 2020052330 A1 | 13-02-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230159276